# EUROPEAN PATENT APPLICATION

(11) **EP 4 827 130 A1**
(43) Date of publication of application: **21.10.2026**
(21) Application number: 24910546.1
(22) Date of filing: 02.12.2024
(51) Int. Cl.: H04W 4/70

(54) **SIDELINK COMMUNICATION METHOD, COMMUNICATION APPARATUS, AND COMMUNICATION SYSTEM**

(30) Priority: 29.12.2023 CN 202311866954
(71) Applicant: Huawei Technologies Co., Ltd., Shenzhen, Guangdong 518129 (CN)
(72) Inventor: YE, Kuan, Shenzhen, Guangdong 518129 (CN); WANG, Rui, Shenzhen, Guangdong 518129 (CN); PAN, Xiaodan, Shenzhen, Guangdong 518129 (CN); PENG, Wenjie, Shenzhen, Guangdong 518129 (CN)
(74) Representative: Pfenning, Meinig & Partner mbB
(86) International application number: PCT/CN2024/136069
(87) International publication number: WO 2025/139614

(57) **Abstract**

This application provides a sidelink communication method, a communication apparatus, and a communication system. In the method, a first terminal device sends a first message to a second terminal device, where the first message includes first indication information and an identifier of a third terminal device, the first indication information indicates, between the first terminal device and the second terminal device, an end-to-end QoS flow, and the first indication information includes a QFI; and sends a first correspondence to the second terminal device, where the first correspondence is a correspondence between the first indication information and a PC5 configuration index, and the PC5 configuration index identifies an SLRB configuration between the first terminal device and the third terminal device. The second terminal device can associate the SLRB configuration with the corresponding third terminal device based on the first indication information and the first correspondence, so that when the SLRB configuration is subsequently obtained, the third terminal device corresponding to the configuration can be determined. This ensures normal execution of a control plane procedure.

## Description

This application claims priority to Chinese Patent Application No. 202311866954.6, filed with the China National Intellectual Property Administration on December 29, 2023 and entitled "SIDELINK COMMUNICATION METHOD, COMMUNICATION APPARATUS, AND COMMUNICATION SYSTEM", which is incorporated herein by reference in its entirety.

### TECHNICAL FIELD

Embodiments of this application relate to the communication field, and more specifically, to a sidelink communication method, a communication apparatus, and a communication system.

### BACKGROUND

With the development of technologies, device-to-device (device-to-device, D2D) communication and relay communication between user equipments (user equipments, UEs) have begun to be discussed in standards (for example, the 3rd generation partnership project (3rd generation partnership project, 3GPP)). The D2D communication and the relay communication between UEs may be used for public safety, to improve network and user system performance, for example, enhance coverage and increase system capacity.

Therefore, the standard proposes to deploy one or more relay terminals (relay UEs) between devices based on the D2D communication. Such a terminal has superior capabilities, for example, has more receive and transmit antennas, and can assist a source (source) UE in forwarding data to a target (target) UE, to improve coverage and increase a communication distance. Both the source UE and the relay UE, as well as the relay UE and the target UE, communicate with each other through sidelinks.

When there is a relay UE, link configuration between the source UE and the relay UE and link configuration between the relay UE and the target UE are both critical to normal sidelink communication. If the source UE, the relay UE, and the target UE still obtain the link configuration according to a direct sidelink communication mechanism, the relay UE cannot associate the configuration with the corresponding source UE and the corresponding target UE, affecting normal communication between the source UE and the target UE.

### SUMMARY

This application provides a sidelink communication method, a communication apparatus, and a communication system, to ensure normal communication between a source UE and a target UE. The method, the apparatus, and the system may be applied to a UE-to-UE relay (UE-to-UE relay, U2U relay) scenario, or may be applied to another scenario in which the technical problem described in the background exists.

According to a first aspect, a sidelink communication method is provided. The method may be performed by a first terminal device, or may be performed by a chip or a circuit used in the first terminal device. This is not limited in this application.

The method includes: sending a first message to a second terminal device, where the first message includes first indication information and an identifier of a third terminal device, the first indication information indicates, between the first terminal device and the second terminal device, a first quality of service (quality of service, QoS) flow, the first QoS flow is a QoS flow between the first terminal device and the third terminal device, the first terminal device communicates with the third terminal device via the second terminal device, and the first indication information includes a QoS flow identifier QFI; and sending a first correspondence to the second terminal device, where the first correspondence is a correspondence between the first indication information and a PC5 configuration index, and the PC5 configuration index identifies a sidelink radio bearer SLRB configuration between the first terminal device and the third terminal device.

Based on the foregoing technical solution, the second terminal device can associate the SLRB configuration between the first terminal device and the third terminal device with the corresponding third terminal device based on the first indication information and the first correspondence, so that when the SLRB configuration is subsequently obtained, the third terminal device corresponding to the configuration can be determined. This ensures normal execution of a control plane procedure, and ensures normal communication between the first terminal device and the third terminal device.

In a possible implementation, the first message further includes a QoS parameter corresponding to the first QoS flow, and the method further includes: receiving a second message from the second terminal device, where the second message includes a first packet delay budget and the first indication information, the first packet delay budget is determined based on the QoS parameter, the first packet delay budget indicates a packet delay budget corresponding to the first QoS flow on a first link, and the first link is a link between the first terminal device and the second terminal device.

In a possible implementation, the method further includes: determining a correspondence between the first packet delay budget and the first QoS flow based on the first indication information.

In a possible implementation, the identifier of the third terminal device is a layer-2 identifier.

In a possible implementation, the correspondence between the first packet delay budget and the first QoS flow is used to determine the PC5 configuration index.

Optionally, one first terminal device communicates with N third terminal devices via the second terminal device, where N is a positive integer; and the first message includes N pieces of first information, and each piece of first information includes first indication information and an identifier of a third terminal device.

According to a second aspect, a sidelink communication method is provided. The method may be performed by a second terminal device, or may be performed by a chip or a circuit used in the second terminal device. This is not limited in this application.

The method includes: receiving a first message from a first terminal device, where the first message includes first indication information and an identifier of a third terminal device, the first indication information indicates, between the first terminal device and the second terminal device, a first quality of service QoS flow, the first QoS flow is a QoS flow between the first terminal device and the third terminal device, the first terminal device communicates with the third terminal device via the second terminal device, and the first indication information includes a QFI; receiving a first correspondence from the first terminal device, where the first correspondence is a correspondence between the first indication information and a PC5 configuration index, and the PC5 configuration index identifies an SLRB configuration between the first terminal device and the third terminal device; and determining a correspondence between the PC5 configuration index and the third terminal device based on the first message and the first correspondence.

Based on the foregoing technical solution, the second terminal device can associate the SLRB configuration between the first terminal device and the third terminal device with the corresponding third terminal device based on the first indication information and the first correspondence, so that when the SLRB configuration is subsequently obtained, the third terminal device corresponding to the configuration can be determined. This ensures normal execution of a control plane procedure, and ensures normal communication between the first terminal device and the third terminal device.

In a possible implementation, the determining the correspondence between the PC5 configuration index and the third terminal device based on the first message and the first correspondence includes: associating the third terminal device with the PC5 configuration index in a one-to-one manner based on the first indication information.

In a possible implementation, the first message further includes a QoS parameter corresponding to the first QoS flow, and the method further includes: determining a first packet delay budget based on the QoS parameter, where the first packet delay budget indicates a packet delay budget corresponding to the first QoS flow on a first link, and the first link is a link between the first terminal device and the second terminal device; and sending a second message to the first terminal device, where the second message includes the first packet delay budget and first indication information.

According to a third aspect, a sidelink communication method is provided. The method may be performed by a first terminal device, or may be performed by a chip or a circuit used in the first terminal device. This is not limited in this application.

The method includes: sending a first message to a second terminal device, where the first message includes second indication information and an identifier of a third terminal device, the second indication information indicates, within a scope of the third terminal device, a first QoS flow, the first QoS flow is a QoS flow between the first terminal device and the third terminal device, the first terminal device communicates with the third terminal device via the second terminal device, and the second indication information includes a PC5 QoS flow identifier PFI; and sending a third message to the second terminal device, where the third message includes the identifier of the third terminal device and a second correspondence, the second correspondence is a correspondence between the second indication information and a PC5 configuration index, and the PC5 configuration index identifies an SLRB configuration between the first terminal device and the third terminal device.

Based on the foregoing solution, the second terminal device can associate the SLRB configuration between the first terminal device and the third terminal device with the corresponding third terminal device based on the second indication information and the second correspondence, so that when the SLRB configuration is subsequently obtained, the third terminal device corresponding to the configuration can be determined. This ensures correct execution of a control plane procedure, and ensures normal communication between the first terminal device and the third terminal device.

In a possible implementation, the first message further includes a QoS parameter corresponding to the first QoS flow, and the method further includes: receiving a second message from the second terminal device, where the second message includes a first packet delay budget, the identifier of the third terminal device, and the second indication information, the first packet delay budget is determined based on the QoS parameter, the first packet delay budget indicates a packet delay budget corresponding to the first QoS flow on a first link, and the first link is a link between the first terminal device and the second terminal device.

In a possible implementation, the method further includes: determining a relationship between the first packet delay budget and the first QoS flow based on the identifier of the third terminal device and the second indication information.

Optionally, the correspondence between the first packet delay budget and the first QoS flow is used to determine the PC5 configuration index.

For example, the identifier of the third terminal device is a layer-2 identifier.

Optionally, one first terminal device communicates with N third terminal devices via the second terminal device, where N is a positive integer; the first message includes N pieces of second information, and each piece of second information includes second indication information and an identifier of a third terminal device; and the third message includes N pieces of third information, and each piece of third information includes an identifier of a third terminal device and a second correspondence.

For example, the second message includes N pieces of fourth information, and each piece of fourth information includes an identifier of a third terminal device and second indication information.

According to a fourth aspect, a sidelink communication method is provided. The method may be performed by a second terminal device, or may be performed by a chip or a circuit used in the second terminal device. This is not limited in this application.

The method includes: receiving a first message from a first terminal device, where the first message includes second indication information and an identifier of a third terminal device, the second indication information indicates, within a scope of the third terminal device, a first QoS flow, the first QoS flow is a QoS flow between the first terminal device and the third terminal device, the first terminal device communicates with the third terminal device via the second terminal device, and the second indication information includes a PFI; receiving a third message from the first terminal device, where the third message includes the identifier of the third terminal device and a second correspondence, the second correspondence is a correspondence between the second indication information and a PC5 configuration index, and the PC5 configuration index identifies an SLRB configuration between the first terminal device and the third terminal device; and determining a correspondence between the PC5 configuration index and the third terminal device based on the first message and the third message.

Based on the foregoing solution, the second terminal device can associate the SLRB configuration between the first terminal device and the third terminal device with the corresponding third terminal device based on the second indication information and the second correspondence, so that when the SLRB configuration is subsequently obtained, the third terminal device corresponding to the configuration can be determined. This ensures correct execution of a control plane procedure, and ensures normal communication between the first terminal device and the third terminal device.

In a possible implementation, the determining the correspondence between the PC5 configuration index and the third terminal device based on the first message and the third message includes: associating the third terminal device with the PC5 configuration index in a one-to-one manner based on the identifier of the third terminal device and the second indication information.

In a possible implementation, the first message further includes a QoS parameter corresponding to the QoS flow, and the method further includes: determining a first packet delay budget based on the QoS parameter, where the first packet delay budget indicates a packet delay budget corresponding to the first QoS flow on a first link, and the first link is a link between the first terminal device and the second terminal device; and sending a second message to the first terminal device, where the second message includes the identifier of the third terminal device, the second indication information, and the first packet delay budget.

According to a fifth aspect, a sidelink communication method is provided. The method may be performed by a second terminal device, or may be performed by a chip or a circuit used in the second terminal device. This is not limited in this application.

The method includes: sending third indication information to an access network device, where the third indication information identifies, between the second terminal device and the access network device, a first SLRB, the first SLRB is an SLRB between a first terminal device and a third terminal device, and the first terminal device communicates with the third terminal device via the second terminal device; receiving a third correspondence from the access network device, where the third correspondence is a correspondence between the third indication information and a radio link control RLC channel; and determining a correspondence between the RLC channel and the third terminal device based on the third indication information and the third correspondence.

Based on the foregoing solution, the second terminal device can associate the RLC channel with the corresponding first terminal device based on the third indication information and the third correspondence, so that in subsequent data transmission, an RLC channel corresponding to a data packet can be determined. This ensures normal execution of a data plane procedure, and ensures normal communication between the first terminal device and the third terminal device.

In a possible implementation, the determining the correspondence between the RLC channel and the third terminal device based on the third indication information and the third correspondence includes: associating the RLC channel with the third terminal device in a one-to-one manner based on the third indication information.

In a possible implementation, the method further includes: mapping a PC5 configuration index to the third indication information, where the PC5 configuration index identifies an SLRB configuration between the first terminal device and the third terminal device.

According to a sixth aspect, a sidelink communication method is provided. The method may be performed by an access network device, or may be performed by a chip or a circuit used in the access network device. This is not limited in this application.

The method includes: receiving third indication information from a second terminal device, where the third indication information identifies, between the second terminal device and the access network device, a first SLRB, the first SLRB is an SLRB between a first terminal device and a third terminal device, and the first terminal device communicates with the third terminal device via the second terminal device; and sending a third correspondence to the second terminal device, where the third correspondence is a correspondence between the third indication information and an RLC channel.

Based on the foregoing solution, the second terminal device can associate the RLC channel with the corresponding first terminal device based on the third indication information and the third correspondence, so that in subsequent data transmission, an RLC channel corresponding to a data packet can be determined. This ensures normal execution of a data plane procedure, and ensures normal communication between the first terminal device and the third terminal device.

According to a seventh aspect, a sidelink communication method is provided. The method may be performed by a second terminal device, or may be performed by a chip or a circuit used in the second terminal device. This is not limited in this application.

The method includes: sending a fourth message to an access network device, where the fourth message includes fourth indication information and an identifier of a first terminal device, the fourth indication information identifies, on a first unicast connection, a first SLRB, the first unicast connection is a unicast connection between the first terminal device and a third terminal device, the first SLRB is an SLRB between the first terminal device and the third terminal device, and the first terminal device communicates with the third terminal device via the second terminal device; receiving a fifth message from the access network device, where the fifth message includes the identifier of the first terminal device and a fourth correspondence, and the fourth correspondence is a correspondence between the fourth indication information and an RLC channel; and determining a correspondence between the first terminal device and the RLC channel based on the fourth message and the fifth message.

Based on the foregoing solution, the second terminal device can associate the RLC channel with the corresponding first terminal device based on the fourth indication information and the fourth correspondence, so that in subsequent data transmission, an RLC channel corresponding to a data packet can be determined. This ensures normal execution of a data plane procedure, and ensures normal communication between the first terminal device and the third terminal device.

In a possible implementation, the determining the correspondence between the first terminal device and the RLC channel based on the fourth message and the fifth message includes: associating the first terminal device with the RLC channel in a one-to-one manner based on the fourth indication information and the identifier of the first terminal device.

For example, the identifier of the first terminal device is a layer-2 identifier.

Optionally, M first terminal devices communicate with one third terminal device via the second terminal device, where M is a positive integer; the fourth message includes an identifier of the third terminal device and M pieces of fifth information, and each piece of fifth information includes an identifier of a first terminal device and fourth indication information; and the fifth message includes the identifier of the third terminal device and M pieces of sixth information, and each piece of sixth information includes an identifier of a first terminal device and a fourth correspondence.

According to an eighth aspect, a sidelink communication method is provided. The method may be performed by an access network device, or may be performed by a chip or a circuit used in the access network device. This is not limited in this application.

The method includes: receiving a fourth message from a second terminal device, where the fourth message includes fourth indication information and an identifier of a first terminal device, the fourth indication information identifies, on a first unicast connection, a first SLRB, the first unicast connection is a unicast connection between the first terminal device and a third terminal device, the first SLRB is an SLRB between the first terminal device and the third terminal device, and the first terminal device communicates with the third terminal device via the second terminal device; and sending a fifth message to the second terminal device, where the fifth message includes the identifier of the first terminal device and a fourth correspondence, and the fourth correspondence is a correspondence between the fourth indication information and an RLC channel.

Based on the foregoing solution, the second terminal device can associate the RLC channel with the corresponding first terminal device based on the fourth indication information and the fourth correspondence, so that in subsequent data transmission, an RLC channel corresponding to a data packet can be determined. This ensures normal execution of a data plane procedure, and ensures normal communication between the first terminal device and the third terminal device.

According to a ninth aspect, a sidelink communication method is provided. The method may be performed by a second terminal device, or may be performed by a chip or a circuit used in the second terminal device. This is not limited in this application.

The method includes: determining a sixth message, where the sixth message includes fifth indication information, the fifth indication information indicates an RLC mode of an RLC channel between a first terminal device and the second terminal device, the sixth message does not include information about a first QoS flow, the first QoS flow is a QoS flow between the first terminal device and a third terminal device, and the first terminal device communicates with the third terminal device via the second terminal device; and sending the sixth message to an access network device.

Based on the foregoing solution, the second terminal device can correctly report the RLC mode when serving as an RX UE, so that a control plane procedure is normally executed, and normal communication between a source UE and a target UE can be ensured.

According to a tenth aspect, a communication apparatus is provided. The apparatus may be a first terminal device, or may be a chip or a circuit used in the first terminal device. This is not limited in this application.

The apparatus includes a transceiver unit, configured to send a first message to a second terminal device, where the first message includes first indication information and an identifier of a third terminal device, the first indication information indicates, between the first terminal device and the second terminal device, a first quality of service QoS flow, the first QoS flow is a QoS flow between the first terminal device and the third terminal device, the first terminal device communicates with the third terminal device via the second terminal device, and the first indication information includes a QoS flow identifier QFI. The transceiver unit is further configured to send a first correspondence to the second terminal device, where the first correspondence is a correspondence between the first indication information and a PC5 configuration index, and the PC5 configuration index identifies a sidelink radio bearer SLRB configuration between the first terminal device and the third terminal device.

In a possible implementation, the first message further includes a QoS parameter corresponding to the first QoS flow, and the transceiver unit is further configured to receive a second message from the second terminal device, where the second message includes a first packet delay budget and the first indication information, the first packet delay budget is determined based on the QoS parameter, the first packet delay budget indicates a packet delay budget corresponding to the first QoS flow on a first link, and the first link is a link between the first terminal device and the second terminal device.

In a possible implementation, the apparatus further includes a processing unit, configured to determine a correspondence between the first packet delay budget and the first QoS flow based on the first indication information.

In a possible implementation, the identifier of the third terminal device is a layer-2 identifier.

In a possible implementation, the correspondence between the first packet delay budget and the first QoS flow is used to determine the PC5 configuration index.

According to an eleventh aspect, a communication apparatus is provided. The apparatus may be a second terminal device, or may be a chip or a circuit used in the second terminal device. This is not limited in this application.

The apparatus includes: a transceiver unit, configured to receive a first message from a first terminal device, where the first message includes first indication information and an identifier of a third terminal device, the first indication information indicates, between the first terminal device and the second terminal device, a first quality of service QoS flow, the first QoS flow is a QoS flow between the first terminal device and the third terminal device, the first terminal device communicates with the third terminal device via the second terminal device, and the first indication information includes a QFI, where the transceiver unit is further configured to receive a first correspondence from the first terminal device, where the first correspondence is a correspondence between the first indication information and a PC5 configuration index, and the PC5 configuration index identifies an SLRB configuration between the first terminal device and the third terminal device; and a processing unit, configured to determine a correspondence between the PC5 configuration index and the third terminal device based on the first message and the first correspondence.

In a possible implementation, the processing unit is specifically configured to associate the third terminal device with the PC5 configuration index in a one-to-one manner based on the first indication information.

In a possible implementation, the first message further includes a QoS parameter corresponding to the first QoS flow, and the processing unit is further configured to determine a first packet delay budget based on the QoS parameter, where the first packet delay budget indicates a packet delay budget corresponding to the first QoS flow on a first link, and the first link is a link between the first terminal device and the second terminal device; and the transceiver unit is further configured to send a second message to the first terminal device, where the second message includes the first packet delay budget and first indication information.

According to a twelfth aspect, a communication apparatus is provided. The apparatus may be a first terminal device, or may be a chip or a circuit used in the first terminal device. This is not limited in this application.

The apparatus includes a transceiver unit, configured to send a first message to a second terminal device, where the first message includes second indication information and an identifier of a third terminal device, the second indication information indicates, within a scope of the third terminal device, a first QoS flow, the first QoS flow is a QoS flow between the first terminal device and the third terminal device, the first terminal device communicates with the third terminal device via the second terminal device, and the second indication information includes a PC5 QoS flow identifier PFI. The transceiver unit is further configured to send a third message to the second terminal device, where the third message includes the identifier of the third terminal device and a second correspondence, the second correspondence is a correspondence between the second indication information and a PC5 configuration index, and the PC5 configuration index identifies an SLRB configuration between the first terminal device and the third terminal device.

In a possible implementation, the first message further includes a QoS parameter corresponding to the first QoS flow, and the transceiver unit is further configured to receive a second message from the second terminal device, where the second message includes a first packet delay budget, the identifier of the third terminal device, and the second indication information, the first packet delay budget is determined based on the QoS parameter, the first packet delay budget indicates a packet delay budget corresponding to the first QoS flow on a first link, and the first link is a link between the first terminal device and the second terminal device.

In a possible implementation, the apparatus further includes a processing unit, configured to determine a relationship between the first packet delay budget and the first QoS flow based on the identifier of the third terminal device and the second indication information.

Optionally, the correspondence between the first packet delay budget and the first QoS flow is used to determine the PC5 configuration index.

For example, the identifier of the third terminal device is a layer-2 identifier.

According to a thirteenth aspect, a communication apparatus is provided. The apparatus may be a second terminal device, or a chip or a circuit used in the second terminal device. This is not limited in this application.

The apparatus includes: a transceiver unit, configured to receive a first message from a first terminal device, where the first message includes second indication information and an identifier of a third terminal device, the second indication information indicates a first QoS flow within a scope of the third terminal device, the first QoS flow is a QoS flow between the first terminal device and the third terminal device, the first terminal device communicates with the third terminal device via the second terminal device, and the second indication information includes a PFI, where the transceiver unit is further configured to receive a third message from the first terminal device, where the third message includes the identifier of the third terminal device and a second correspondence, the second correspondence is a correspondence between the second indication information and a PC5 configuration index, and the PC5 configuration index identifies an SLRB configuration between the first terminal device and the third terminal device; and a processing unit, configured to determine a correspondence between the PC5 configuration index and the third terminal device based on the first message and the third message.

In a possible implementation, the processing unit is specifically configured to associate the third terminal device with the PC5 configuration index in a one-to-one manner based on the identifier of the third terminal device and the second indication information.

In a possible implementation, the first message further includes a QoS parameter corresponding to the QoS flow, and the processing unit is further configured to determine a first packet delay budget based on the QoS parameter, where the first packet delay budget indicates a packet delay budget corresponding to the first QoS flow on a first link, and the first link is a link between the first terminal device and the second terminal device; and the transceiver unit is further configured to send a second message to the first terminal device, where the second message includes the identifier of the third terminal device, the second indication information, and the first packet delay budget.

According to a fourteenth aspect, a communication apparatus is provided. The apparatus may be a first terminal device, or a chip or a circuit used in the first terminal device. This is not limited in this application.

The apparatus includes: a transceiver unit, configured to send third indication information to an access network device, where the third indication information identifies, between the second terminal device and the access network device, a first SLRB, the first SLRB is an SLRB between a first terminal device and a third terminal device, and the first terminal device communicates with the third terminal device via the second terminal device, where the transceiver unit is further configured to receive a third correspondence from the access network device, where the third correspondence is a correspondence between the third indication information and a radio link control RLC channel; and a processing unit, configured to determine a correspondence between the RLC channel and the third terminal device based on the third indication information and the third correspondence.

In a possible implementation, the processing unit is specifically configured to associate the RLC channel with the third terminal device in a one-to-one manner based on the third indication information.

In a possible implementation, the processing unit is further configured to map a PC5 configuration index to the third indication information, where the PC5 configuration index identifies an SLRB configuration between the first terminal device and the third terminal device.

According to a fifteenth aspect, a communication apparatus is provided. The apparatus may be an access network device, or a chip or a circuit used in the access network device. This is not limited in this application.

The apparatus includes a transceiver unit, configured to receive third indication information from a second terminal device, where the third indication information identifies, between the second terminal device and the access network device, a first SLRB, the first SLRB is an SLRB between a first terminal device and a third terminal device, and the first terminal device communicates with the third terminal device via the second terminal device. The transceiver unit is further configured to send a third correspondence to the second terminal device, where the third correspondence is a correspondence between the third indication information and an RLC channel.

According to a sixteenth aspect, a communication apparatus is provided. The apparatus may be a second terminal device, or may be a chip or a circuit used in the second terminal device. This is not limited in this application.

The apparatus includes: a transceiver unit, configured to send a fourth message to an access network device, where the fourth message includes fourth indication information and an identifier of a first terminal device, the fourth indication information identifies, on a first unicast connection, a first SLRB, the first unicast connection is a unicast connection between the first terminal device and a third terminal device, the first SLRB is an SLRB between the first terminal device and the third terminal device, and the first terminal device communicates with the third terminal device via the second terminal device, where the transceiver unit is further configured to receive a fifth message from the access network device, where the fifth message includes the identifier of the first terminal device and a fourth correspondence, and the fourth correspondence is a correspondence between the fourth indication information and an RLC channel; and a processing unit, configured to determine a correspondence between the first terminal device and the RLC channel based on the fourth message and the fifth message.

In a possible implementation, the processing unit is specifically configured to associate the first terminal device with the RLC channel in a one-to-one manner based on the fourth indication information and the identifier of the first terminal device.

For example, the identifier of the first terminal device is a layer-2 identifier.

According to a seventeenth aspect, a communication apparatus is provided. The apparatus may be an access network device, or a chip or a circuit used in the access network device. This is not limited in this application.

The apparatus includes a transceiver unit, configured to receive a fourth message from a second terminal device, where the fourth message includes fourth indication information and an identifier of a first terminal device, the fourth indication information identifies, on a first unicast connection, a first SLRB, the first unicast connection is a unicast connection between the first terminal device and a third terminal device, the first SLRB is an SLRB between the first terminal device and the third terminal device, and the first terminal device communicates with the third terminal device via the second terminal device. The transceiver unit is further configured to send a fifth message to the second terminal device, where the fifth message includes the identifier of the first terminal device and a fourth correspondence, and the fourth correspondence is a correspondence between the fourth indication information and an RLC channel.

According to an eighteenth aspect, a communication apparatus is provided. The apparatus may be a second terminal device, or may be a chip or a circuit used in the second terminal device. This is not limited in this application.

The apparatus includes: a processing unit, configured to determine a sixth message, where the sixth message includes fifth indication information, the fifth indication information indicates an RLC mode of an RLC channel between a first terminal device and the second terminal device, the sixth message does not include information about a first QoS flow, the first QoS flow is a QoS flow between the first terminal device and a third terminal device, and the first terminal device communicates with the third terminal device via the second terminal device; and a transceiver unit, configured to send the sixth message to an access network device.

For technical effects of any one of the tenth aspect to the eighteenth aspect and the possible implementations of the tenth aspect to the eighteenth aspect, refer to technical effects of any one of the first aspect to the ninth aspect and the possible implementations of the first aspect to the ninth aspect. Details are not described herein again.

According to a nineteenth aspect, a communication apparatus is provided, including at least one processor. The at least one processor is coupled to at least one memory, and the at least one processor is configured to execute a computer program or instructions stored in the at least one memory, to cause the communication apparatus to perform the communication method in any one of the possible implementations of the first aspect to the seventh aspect.

According to a twentieth aspect, a processor is provided, configured to perform the communication method in any one of the possible implementations of the first aspect to the seventh aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a twenty-first aspect, a chip system is provided, including a processor, configured to invoke a computer program from a memory and run the computer program, to cause a communication device in which the chip system is installed to perform the communication method in any one of the possible implementations of the first aspect to the seventh aspect.

Optionally, in an implementation, the chip further includes the memory. The memory stores a computer program or instructions. The processor is configured to execute the computer program or the instructions stored in the memory. When the computer program or the instructions are executed, the processor is configured to perform the communication method in any one of the possible implementations of the first aspect to the seventh aspect.

According to a twenty-second aspect, a computer program product including instructions is provided. When the computer program product runs on a communication apparatus, the communication apparatus is caused to perform the communication method in any one of the possible implementations of the first aspect to the seventh aspect.

According to a twenty-third aspect, a computer-readable storage medium is provided. The computer-readable medium stores program code to be executed by a device, and the program code includes instructions used to perform the communication method provided in any one of the possible implementations of the first aspect to the seventh aspect.

According to a twenty-fourth aspect, a chip is provided, including at least one processor and a communication interface. The communication interface is configured to: receive data and/or information, and transmit the received data and/or information to the processor, and the processor processes the data and/or the information, to perform the communication method in any one of the possible implementations of the first aspect to the seventh aspect.

According to a twenty-fifth aspect, a communication system is provided, including a first terminal device and a second terminal device. The first terminal device is configured to perform the communication method in any one of the first aspect or the third aspect and the possible implementations of the first aspect or the third aspect. The second terminal device is configured to perform the communication method in any one of the second aspect or the fourth aspect and the possible implementations of the second aspect or the fourth aspect.

According to a twenty-sixth aspect, a communication system is provided, including a second terminal device and an access network terminal device. The second terminal device is configured to perform the communication method in any one of the fifth aspect or the seventh aspect and the possible implementations of the fifth aspect or the seventh aspect. The access network device is configured to perform the communication method in any one of the sixth aspect or the eighth aspect and the possible implementations of the sixth aspect or the eighth aspect.

According to a twenty-seventh aspect, a communication system is provided, including a second terminal device and an access network device. The second terminal device is configured to perform the communication method in any one of the possible implementations of the ninth aspect.

Optionally, any one of the foregoing communication systems may further include a third terminal device.

### BRIEF DESCRIPTION OF DRAWINGS

FIG. 1 is a diagram of an architecture of a communication system 100 to which an embodiment of this application is applied;
FIG. 2 is a diagram of a protocol stack architecture applicable to an embodiment of this application;
FIG. 3 is a diagram of obtaining an SLRB configuration by a TX UE;
FIG. 4 shows a control plane procedure in an L2 U2U relay scenario;
FIG. 5 is a diagram of a scenario in which a relay UE provides relay services for a plurality of remote UEs;
FIG. 6 is a schematic flowchart of a sidelink communication method according to this application;
FIG. 7 is a schematic flowchart of a sidelink communication method 400 according to this application;
FIG. 8 is a schematic flowchart of a sidelink communication method 500 according to this application;
FIG. 9 is a schematic flowchart of a sidelink communication method 600 according to this application;
FIG. 10 is a schematic flowchart of a sidelink communication method 700 according to this application;
FIG. 11 is a schematic flowchart of a sidelink communication method 800 according to this application;
FIG. 12 is a block diagram of an example of a communication apparatus according to an embodiment of this application;
FIG. 13 is a block diagram of another example of a communication apparatus 1300 according to an embodiment of this application; and
FIG. 14 is a block diagram of an example of a chip system 1400 according to an embodiment of this application.

### DESCRIPTION OF EMBODIMENTS

The following describes technical solutions of this application with reference to accompanying drawings.

In a wireless communication system, terminal devices may perform data communication with each other via an access network device, or the terminal devices may directly perform communication with each other without the access network device. In this way, a communication delay can be effectively reduced.

An interface between the terminal devices is referred to as a proximity communication (proximity communication, PC) 5 interface, and the PC5 interface is similar to a Uu interface between the terminal device and the access network device. A link between the terminal devices is referred to as a sidelink (sidelink, SL), and a typical application scenario of SL communication is vehicle-to-everything (vehicle-to-everything, V2X). In the vehicle-to-everything, each vehicle may be considered as a terminal device.

The SL supports broadcast communication, unicast communication, and multicast communication. The following separately describes the broadcast communication, the unicast communication, and the multicast communication.

### (1) Broadcast communication

The broadcast communication is similar to broadcasting system information by the access network device. To be specific, the terminal device sends data of a broadcast service to the outside without encryption. Any other terminal device within an effective reception scope may receive the data of the broadcast service if the terminal device is interested in the broadcast service.

### (2) Unicast communication

The unicast communication is similar to data communication performed after a radio resource control (radio resource control, RRC) connection is established between the terminal device and the access network device. In the unicast communication, the two terminal devices need to first establish a unicast connection. After the unicast connection is established, the two terminal devices perform the data communication based on negotiated identifiers (a source L2 ID and a destination L2 ID described below).

The unicast communication performed once on the SL corresponds to a pair of IDs: a source layer-2 identifier (source layer-2 identifier, L2 ID) and a destination layer-2 identifier (destination layer-2 identifier, destination L2 ID). A subheader of each SL media access control protocol data unit (media access control protocol data unit, MAC PDU) includes some bytes of the source L2 ID and some bytes of the destination L2 ID, so that data is transmitted to a correct receiving end.

The data transmitted between the two terminal devices may be encrypted or may not be encrypted. Compared with the broadcast communication, in the unicast communication, the unicast communication can be performed between only two terminal devices between which the unicast connection is established.

### (3) Multicast communication

The multicast communication is communication between all terminal devices in a communication group. Any terminal device in the group can receive and send data of a multicast service.

In the SL communication, one terminal device may provide a relay service for communication between other terminal devices. This scenario may be referred to as a UE-to-UE relay (UE-to-UE relay, U2U relay) scenario. In this scenario, there is one initiating UE (also referred to as a source (source) UE), one or more target (target) UEs, and one or more relay (relay) UEs. There is a requirement for unicast communication between the source UE and the target UE, and the relay UE may be used for coverage enhancement (for example, a coverage signal between the source UE and the target UE is poor or the source UE and the target UE are out of coverage) or capacity improvement (for example, the relay UE is a device with superior capabilities). The source UE and the target UE may transfer data and signaling via the relay UE. It should be understood that the relay UE has superior capabilities, for example, has more receive and transmit antennas. The terminal can assist the source UE in forwarding data to the target UE, to improve coverage and increase a communication distance.

In the U2U relay scenario, both the source UE and the target UE may be referred to as remote UEs (remote UEs) or end UEs (end UEs), the source UE may also be referred to as a transmit remote UE (TX remote UE), and the target UE may also be referred to as a receive remote UE (RX remote UE).

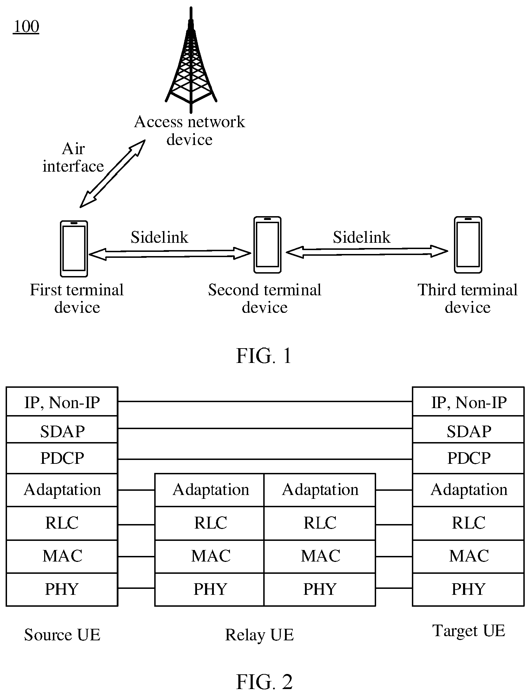

The following describes a U2U relay communication system provided in embodiments of this application with reference to FIG. 1 and FIG. 2.

FIG. 1 is a diagram of an architecture of an example of a communication system applicable to an embodiment of this application.

For example, as shown in FIG. 1, the U2U relay communication system 100 includes a first terminal device (which may also be referred to as a remote UE or a source UE), at least one second terminal device (which may also be referred to as a relay UE), and a third terminal device (which may also be referred to as a remote UE or a target UE). The second terminal device is configured to provide a relay service for communication between the first terminal device and the third terminal device.

In the communication system 100, the second terminal device communicates with the first terminal device through a sidelink (sidelink, SL) (for example, a PC5 interface), and the second terminal device communicates with the third terminal device through an SL (for example, a PC5 interface).

It should be understood that the second terminal device, the first terminal device, and the third terminal device (referred to as terminal devices in the following) are devices having a wireless transceiver function, and may be a user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device 120 may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), a customer-premises equipment (customer-premises equipment, CPE), a smart point of sale (point of sale, POS) machine, a handheld device having a wireless communication function, a compute device, another processing device connected to a wireless modem, a vehicle-mounted device, a communication device carried on a high-altitude aircraft, a wearable device, an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited in this application.

A communication apparatus configured to implement a function of the terminal device may be a terminal device, or may be an apparatus that can support the terminal device in implementing the function, for example, a chip system. The apparatus may be mounted in the terminal device or used in conjunction with the terminal device. In this application, the chip system may include a chip, or may include a chip and another discrete component.

Optionally, the communication system 100 may further include an access network device. The access network device and the terminal device may communicate with each other through an air interface (for example, a Uu interface), and the access network device may provide a network service for the terminal device. For example, as shown in FIG. 1, the first terminal device and the access network device may communicate with each other through a Uu interface, and the access network device may provide a network service access network device for the first terminal device.

It should be understood that the access network device is a device having a wireless transceiver function, and is configured to communicate with the terminal device. The access network device may be a node in a radio access network (radio access network, RAN), and may be referred to as a base station, or may be referred to as a RAN node. The access network device may be an evolved NodeB (evolved NodeB, eNB, or eNodeB) of long term evolution (long term evolution, LTE), a base station in a 5G network like a gNodeB (gNB), a base station in a public land mobile network (public land mobile network, PLMN) evolved after 5G, a broadband network gateway (broadband network gateway, BNG), an aggregation switch, a 3rd generation partnership project (3rd generation partnership project, 3GPP) access device, or the like.

The RAN may be configured as a RAN defined in a 3GPP protocol, an open radio access network (open radio access network, O-RAN), a cloud access network (cloud radio access network, C-RAN), or the like. The access network device 110 may further include base stations in various forms, for example, a macro base station, a micro base station (also referred to as a small cell), a relay station, a transmitting and receiving point (transmitting and receiving point, TRP), a transmitting point (transmitting point, TP), a mobile switching center, a device that functions as a base station in device-to-device (device-to-device, D2D) communication, vehicle-to-everything (vehicle-to-everything, V2X) communication, and machine-to-machine (machine-to-machine, M2M) communication, an access network device in a non-terrestrial communication network (non-terrestrial network, NTN), and the like. This is not specifically limited.

The access network device may further include a network element or a module that implements some functions of the base station, for example, include one or more of the following: a central unit (central unit, CU), a distributed unit (distributed unit, DU), or a radio unit (radio unit, RU). Optionally, the CU may be further split into a CU-control plane (control plane, CP) and a CU-user plane (user plane, UP). Functions of the CU and the DU may be implemented by different network elements, or may be both implemented by a baseband unit (baseband unit, BBU) of the base station. A function of the RU may be implemented by a radio frequency device of the base station. For example, the radio frequency device of the base station may be a remote radio processing unit (remote radio unit, RRU), a pico remote radio unit (pico remote radio unit, pRRU), an active antenna processing unit (active antenna unit, AAU), or another unit, module, or device having a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between a DU and an RU in an O-RAN system, or the like. This is not limited.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented via a software module, a hardware module, or a combination of a software module and a hardware module.

A communication apparatus configured to implement a function of the access network device may be an access network device, or may be an apparatus that can support the access network device in implementing the function, for example, a chip system. The apparatus may be mounted in the access network device or used in conjunction with the access network device. In this embodiment of this application, the chip system may include a chip, or may include a chip and another discrete component.

The communication system 100 may alternatively be the following system: a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5G system, a 6G system, or an NTN system like an inter-satellite communication system or a satellite communication system. The satellite communication system includes a satellite base station and a terminal device. The satellite base station provides a communication service for the terminal device. The satellite base station may also communicate with a terrestrial base station. A satellite may serve as a base station, or may serve as a terminal device. The satellite may be a non-terrestrial base station, a non-terrestrial device, or the like, for example, an uncrewed aerial vehicle, a hot air balloon, a low-earth orbit satellite, a medium-earth orbit satellite, or a high-earth orbit satellite.

The communication system 100 may alternatively be a terrestrial cellular communication system, a high-altitude platform station (high-altitude platform station, HAPS) communication system, a V2X system, an integrated access and backhaul (integrated access and backhaul, IAB) system, a reconfigurable intelligent surface (reconfigurable intelligent surface, RIS) communication system, or the like. This is not limited.

It should be understood that FIG. 1 is merely a simplified diagram of an example for ease of understanding. The communication system may further include another device that is not drawn in FIG. 1.

FIG. 2 is a diagram of a protocol stack architecture applicable to an embodiment of this application. The architecture is a user plane protocol architecture in an L2-based U2U scenario. As shown in FIG. 2, the protocol architecture includes an internet protocol (internet protocol, IP) layer, a Non-IP layer, a service data adaptation protocol (service data adaptation protocol, SDAP) layer, a packet data convergence protocol (packet data convergence protocol, PDCP) layer, a radio link control (radio link control, RLC) protocol layer, a medium access control (medium access control, MAC) protocol layer, and a physical layer (physical layer, PHY) protocol layer.

In addition, in the protocol architecture, an adaptation layer (adaptation layer) is added between the RLC layer and the PDCP layer. A main function of the adaptation layer is bearer multiplexing and demultiplexing. To be specific, data of different target UEs may be multiplexed onto one unicast connection between a source UE and a relay UE, or data of one unicast connection may be split into different unicast connections; and data of different radio bearers may be multiplexed onto one RLC bearer, or data of one RLC bearer may be split into different radio bearers.

It should be understood that, in an L2-based relay scenario, user plane data is relayed and forwarded on a relay user equipment side below the PDCP layer.

In addition, to distinguish between data of different target UEs that is multiplexed on a same unicast connection, and distinguish between data of different radio bearers that is multiplexed on a same RLC bearer, the source UE includes a local ID of the source UE, a local ID of the target UE, and a bearer (bearer) ID in an adaptation layer header of a data packet, to indicate a target UE and a radio bearer to which the data belongs. The local IDs of the source UE and the target UE are allocated by the relay UE.

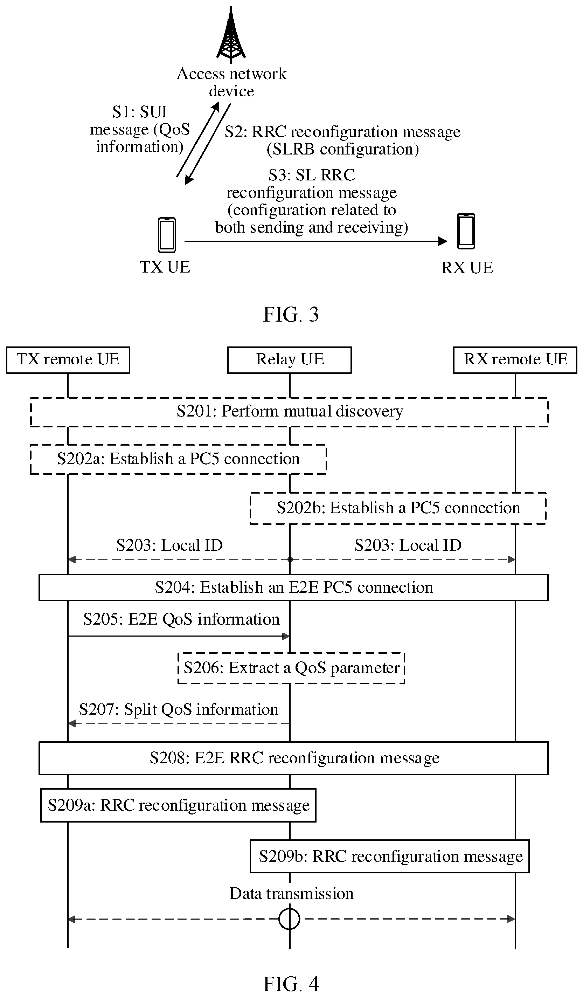

In NR SL communication, when two UEs perform unicast communication, a transmitting UE (TX UE) and a receiving UE (RX UE) need to have consistent sidelink radio bearer (sidelink radio bearer, SLRB) configurations, to control data transmission or signaling transmission. The following describes a process in which a UE obtains an SLRB configuration in a direct SL communication mechanism with reference to FIG. 3.

FIG. 3 is a diagram of obtaining an SLRB configuration by a TX UE. According to the direct SL communication mechanism in R16, when a transmitting UE (TX UE) is in a connected state, the TX UE reports an L2 ID of a receiving UE (RX UE) and corresponding quality of service (quality of service, QoS) information to a serving base station of the TX UE based on a sidelink communication terminal information (SidelinkUEInformationNR, SUI) message, as shown in step 1 in FIG. 3. When there are a plurality of RX UEs, the TX UE reports a list, where each entry includes an L2 ID of one RX UE and corresponding QoS information, so that the serving base station can distinguish QoS information corresponding to different RX UEs. The QoS information includes a QoS flow identifier (QoS flow identifier, QFI) of each QoS flow (QoS flow) and a corresponding QoS parameter. The QFI uniquely identifies an SL QoS flow between the UE and a network. A value of the QFI is unique within a UE scope, and is unique for different destinations (Destinations) and communication types (broadcast, multicast, and unicast).

A QoS flow for communication between the TX UE and the RX UE is generated by an upper layer (for example, an application layer, a V2X layer, or a ProSe layer). The upper layer indicates a PC5 QoS flow identifier (PC5 QoS identifier, PFI or PQFI for short, which is uniformly referred to as PFI for ease of description below) to an access (access, AS) layer. The PFI is unique per destination, that is, QoS flows between the TX UE and a same RX UE correspond to different PFIs, however, PFIs corresponding to QoS flows between different RX UEs may be the same. The TX UE maps the PFIs to unique QFIs in the UE in a one-to-one manner, that is, QFIs corresponding to QoS flows between the TX UE and different RX UEs are different. How to perform mapping is implemented by the TX UE, and the TX UE stores the mapping relationship, which is denoted as a mapping relationship #a.

The base station provides an SLRB configuration list for the TX UE based on the QoS information reported by the TX UE. Each entry includes an SDAP configuration, a PDCP configuration, an RLC configuration, a MAC configuration, and a PHY configuration. The base station may deliver the SLRB configuration list to the TX UE based on an RRC reconfiguration message, as shown in step 2 in FIG. 3.

After receiving the SLRB configuration delivered by the base station, the TX UE determines, based on a QFI in the SDAP configuration and the mapping relationship #a, an RX UE corresponding to each entry in the SLRB configuration list. The TX UE may send, to the RX UE based on a sidelink RRC reconfiguration (RRCReconfigurationSidelink) message, configuration parameters (for example, parameters such as a mapping relationship between a QoS flow and an SLRB, a PDCP serial number (serial number, SN) length, an RLC mode (mode), and a logical channel identifier (logical channel identifier, LCID)) related to both sending and receiving, as shown in step 3 in FIG. 3. The mapping relationship between the QoS flow and the SLRB is indicated by using a PFI and a PC5 configuration index (Config Index).

SL communication is usually bidirectional communication. According to the direct SL communication mechanism in R16, the RX UE may alternatively report, to the serving base station of the RX UE based on an SUI message, an RLC mode of an SLRB indicated by the TX UE and QoS information associated with the SLRB, so that when providing an SLRB configuration for the RX UE, the base station can comprehensively consider an RLC channel (channel) already established for the RX UE. For example, if an RLC channel #1 in an acknowledged mode (Acknowledged Mode, AM) has been established between the RX UE and the TX UE, when the base station needs to configure an AM RLC channel for the RX UE, the base station may consider reusing the RLC channel #1. It should be understood that the RX UE may determine, based on a mapping relationship that is between a QoS flow and an SLRB and that is from the TX UE, QoS information associated with the SLRB.

It should be understood that, in the U2U relay scenario, a procedure in which the UE obtains the SLRB configuration is still in a discussion phase. The foregoing describes a basic procedure in which the TX UE and the RX UE obtain the SLRB configuration in the direct SL communication mechanism. The following describes a control plane procedure of L2 U2U relay with reference to FIG. 4.

FIG. 4 shows a control plane procedure in an L2 U2U relay scenario. As shown in FIG. 4, the procedure includes the following steps.

S201: A TX remote UE, a relay UE, and an RX remote UE perform mutual discovery.

It should be understood that in the L2 U2U relay scenario, the TX remote UE may also be referred to as a U2U remote UE, the relay UE may be referred to as a U2U relay UE, and the RX remote UE may also be referred to as a peer U2U remote UE.

S202a: Establish a PC5 connection between the TX remote UE and the relay UE.

S202b: Establish a PC5 connection between the relay UE and the RX remote UE.

S203: The relay UE allocates local IDs respectively to the TX remote UE and the RX remote UE.

The relay UE may send the allocated local IDs to the TX remote UE and the RX remote UE respectively based on a sidelink RRC reconfiguration (RRCReconfigurationSidelink).

S204: Establish an end-to-end (end-to-end, E2E) PC5 connection between the TX remote UE and the RX remote UE.

S205: The TX remote UE sends E2E QoS information to the relay UE.

S206: The relay UE extracts a QoS parameter from the QoS information.

S207: The relay UE sends the split QoS information to the TX remote UE.

S208: Transmit an E2E RRC reconfiguration (E2E RRCReconfigurationSidelink) message between the TX remote UE and the RX remote UE.

S209a: Transmit an RRC reconfiguration (E2E RRCReconfigurationSidelink) message between the TX remote UE and the relay UE.

S209b: Transmit an RRC reconfiguration (E2E RRCReconfigurationSidelink) message between the relay UE and the RX remote UE.

At this point, a control plane configuration is completed. After that, the TX remote UE and the RX remote UE may perform data transmission via the relay UE.

In the foregoing procedure, after the E2E PC5 connection is established between the TX remote UE and the RX remote UE (as shown in S204), the TX remote UE sends the E2E QoS information to the relay UE (as shown in S205), and the relay UE extracts a packet delay budget (packet delay budget, PDB) from the E2E QoS information (as shown in S206), and sends the extracted first-hop PDB to the TX remote UE (as shown in S207).

It should be understood that, in this application, end-to-end means one remote UE to another remote UE. For example, the foregoing E2E QoS information represents QoS information between remote UEs. A first hop is a link between the TX remote UE and the relay UE. For example, the first-hop PDB represents a PDB parameter that needs to be met by the E2E QoS flow on the link between the TX remote UE and the relay UE. Similarly, a second hop is a link between the relay UE and the RX remote UE.

When the TX remote UE is in a connected state, the TX remote UE may report the E2E QoS information and first-hop QoS information to a serving base station of the TX remote UE based on an SUI message. The base station provides an SLRB configuration for the UE based on the QoS information reported by the TX remote UE, including an SDAP configuration, a PDCP configuration, an SRAP configuration (including a mapping relationship between an SLRB and an RLC channel), and an RLC channel configuration (including an RLC configuration and a MAC configuration), and delivers the configuration to the TX remote UE based on the RRC reconfiguration message. For a procedure between the TX remote UE and the serving base station of the TX remote UE, refer to FIG. 3.

After obtaining an SL configuration from the base station, the TX remote UE sends, to the RX remote UE based on the E2E RRCReconfigurationSidelink message (as shown in S208), E2E SDAP configuration and PDCP configuration parameters (for example, parameters such as a mapping relationship between a QoS flow and an SLRB, and a PDCP SN length) related to both sending and receiving, and sends, to the relay UE based on a first-hop RRCReconfigurationSidelink message (as shown in S209a), first-hop configuration parameters (for example, parameters such as an RLC mode and an LCID) related to both sending and receiving. In addition, in S209a, the TX remote UE further sends the mapping relationship between the QoS flow and the SLRB to the relay UE.

The relay UE aggregates, based on the mapping relationship between the QoS flow and the SLRB, second-hop QoS parameters into a QoS parameter at an SLRB granularity, that is, a QoS parameter that needs to be met by an E2E SLRB on the second hop, and reports QoS information at the SLRB granularity to a serving base station of the relay UE based on an SUI message. The serving base station provides an SRAP configuration (including a mapping relationship between an SLRB and an RLC channel) and an RLC channel configuration (including an RLC/MAC configuration) for the UE based on the QoS information reported by the relay UE, and delivers the configurations to the relay UE based on the RRC reconfiguration message.

After obtaining the SL configuration from the base station, the relay UE sends, to the RX remote UE based on a second-hop RRC reconfiguration (RRCReconfigurationSidelink) message (as shown in S209b), second-hop configuration parameters (for example, parameters such as RLC mode and LCID) related to both sending and receiving.

However, the foregoing solution has the following problems:

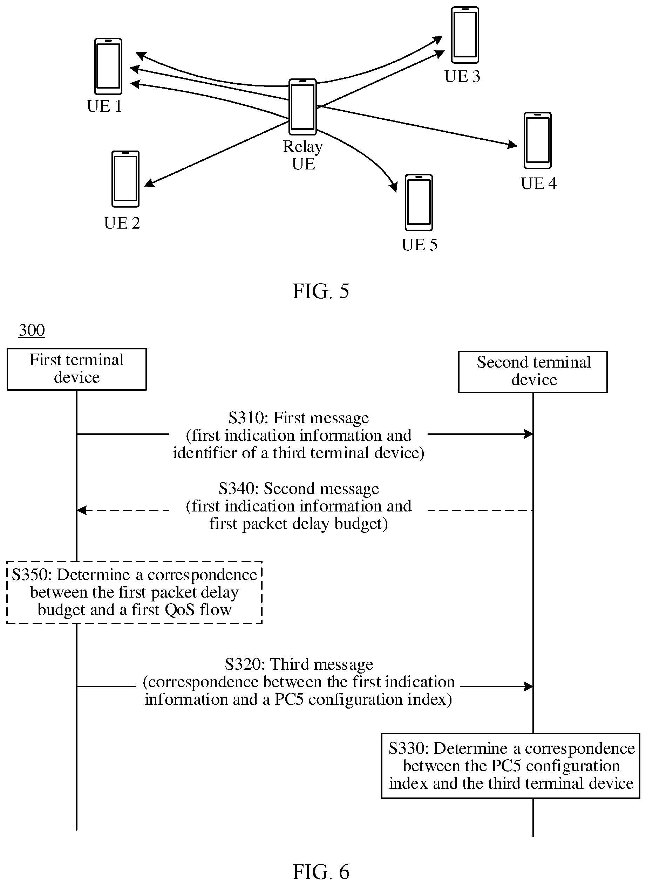

Because both the end-to-end QoS flow and the SLRB are established between remote UEs, and an upper layer of the relay UE does not generate a QoS flow, the relay UE obtains information about the QoS flow and the SLRB from the remote UE. When the relay UE provides relay services for a plurality of remote UEs (for example, as shown in FIG. 5, in a 2:1:3 network topology scenario, there are two TX remote UEs: a UE 1 and a UE 2, and three RX remote UEs: a UE 3, a UE 4, and a UE 5, and the relay UE separately provides relay services for communication between the UE 1 and the UE 3, communication between the UE 1 and the UE 4, communication between the UE 1 and the UE 5, and communication between the UE 2 and the UE 3), the TX remote UE sends the mapping relationship between the QoS flow and the SLRB to the relay UE. The QoS flow may be a QoS flow for communication between the TX remote UE and the plurality of RX remote UEs. In this case, how does the relay UE associate the QoS flow and the SLRB with the corresponding RX remote UE?

In addition, in the U2U relay scenario, the relay UE is not only a TX UE between the relay UE and the RX remote UE, but also an RX UE between the TX remote UE and the relay UE.

First, when the relay UE serves as a TX UE, a difference from the direct SL communication mechanism lies in that the relay UE reports the QoS information at the SLRB granularity in the SUI without reporting a QFI. After obtaining an SLRB configuration from the serving base station of the relay UE, how does the relay UE associate the SLRB configuration with a corresponding RX remote UE?

Second, in the U2U relay, the remote UE is a data generator, and the relay UE only forwards data. Therefore, when the relay UE serves as an RX UE to report the SUI, the relay UE does not need to report QoS information corresponding to the SLRB, and only needs to report an RLC mode. However, according to the direct SL communication mechanism, when the UE serves as an RX UE to report the SUI, the QoS information corresponding to the SLRB is mandatory, as shown in the following:

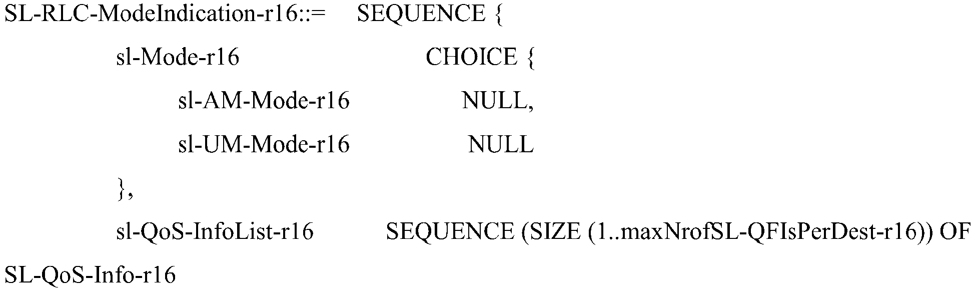

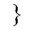

In other words, the relay UE reports redundant information. In addition, bearer multiplexing exists in the U2U relay, that is, a plurality of SLRBs may be transmitted through a same RLC channel (channel). However, a mapping relationship between an SLRB and an RLC channel is configured on a TX remote UE side. When serving as an RX UE, the relay UE does not know the mapping relationship between the SLRB and the RLC channel, and therefore cannot determine QoS information associated with the RLC channel, and cannot correctly report the SUI.

In conclusion, it can be learned that a configuration of a link between a source UE and the relay UE and a configuration of a link between the relay UE and a target UE are both critical to normal sidelink communication. If the source UE, the relay UE, and the target UE still obtain the link configuration according to the direct SL communication mechanism, the relay UE cannot associate the configuration with the corresponding source UE and the corresponding target UE, affecting normal communication between the source UE and the target UE.

In view of this, this application provides a sidelink communication method, a communication apparatus, and a communication system, to associate a configuration with a corresponding source UE and a corresponding target UE, ensuring normal communication between the source UE and the target UE.

It should be understood that a specific structure of an execution body of the method provided in embodiments of this application is not specifically limited in the following embodiments, provided that communication can be performed according to the method provided in embodiments of this application by running a program that records code of the method provided in embodiments of this application. For example, the method provided in embodiments of this application may be performed by a terminal device, or may be performed by a functional module, in the terminal device, that can invoke and execute a program.

FIG. 6 is a schematic flowchart of a sidelink communication method 300 according to this application. The method 300 may include the following steps.

S310: A first terminal device sends a first message to a second terminal device, and correspondingly, the second terminal device receives the first message.

The first message includes first indication information and an identifier of a third terminal device.

It should be understood that, in this application, the first terminal device communicates with the third terminal device via the second terminal device, or the second terminal device is configured to provide a relay service for communication between the first terminal device and the third terminal device. The first terminal device may be understood as a source UE or a TX remote UE, the second terminal device may be understood as a relay UE, and the third terminal device may be understood as a target UE or an RX remote UE.

The first indication information indicates, between the first terminal device and the second terminal device, a first QoS flow, and the first QoS flow is a QoS flow between the first terminal device and the third terminal device.

Specifically, the first QoS flow may be understood as an end-to-end (end-to-end, E2E) QoS flow, and the first QoS flow may be referred to as an SL QoS flow or a PC5 QoS flow.

The first indication information may be understood as uniquely indicating, between the first terminal device and the second terminal device, the E2E QoS flow, or uniquely indicating, within a scope of the first terminal device, the E2E QoS flow.

For example, if the first terminal device includes a UE 1 and a UE 2, the UE 1 and the UE 2 may separately determine the first indication information. The first indication information determined by the UE 1 is unique within a scope of the UE 1, and does not conflict with one another. The first indication information determined by the UE 2 is unique within a scope of the UE 2, and does not conflict with one another.

In an example, the first indication information is a QFI.

It should be understood that, generally, an identifier of a QoS flow on a Uu interface is a QFI, and an identifier of a QoS flow on a PC5 interface is a PFI. In this application, the first terminal device may map a PFI to a QFI (that is, an example of the first indication information), and send the QFI to the second terminal device through the PC5 interface. The QFI may uniquely identify, between the first terminal device and the second terminal device, the E2E QoS flow.

For example (denoted as Example 1), the first terminal device includes a UE 1 (that is, a remote UE ID is 1), and the third terminal device includes a UE 3 and a UE 4 (that is, remote UE IDs are 3 and 4). There are three QoS flows between the UE 1 and the UE 3, and PFIs of the three QoS flows are respectively a PFI #1, a PFI #2, and a PFI #3. There are two QoS flows between the UE 1 and the UE 4, and PFIs of the two QoS flows are respectively a PFI #1 and a PFI #2. In this case, the UE 1 may map the PFIs of the five QoS flows to QFIs in a one-to-one manner, the PFIs of the three QoS flows between the UE 1 and the UE 3 are respectively mapped to a QFI #1, a QFI #2, and a QFI #3, and the PFIs of the two QoS flows between the UE 1 and the UE 4 are respectively mapped to a QFI #4 and a QFI #5. Values of the first indication information are respectively the QFI #1, the QFI #2, the QFI #3, the QFI #4, and the QFI #5.

In another example, the first indication information is bit information.

For example, the first terminal device includes a UE 1 and a UE 2, and the third terminal device includes a UE 3 and a UE 4. There are three QoS flows between the UE 1 and the UE 3, and PFIs of the three QoS flows are respectively a PFI #1, a PFI #2, and a PFI #3. There are two QoS flows between the UE 1 and the UE 4, and PFIs of the two QoS flows are respectively a PFI #1 and a PFI #2. There is one QoS flow between the UE 2 and the UE 3, and a PFI of the QoS flow is a PFI #1. There is one QoS flow between the UE 2 and the UE 4, and a PFI of the QoS flow is a PFI #1. In this case, the UE 1 may map the PFIs of the five QoS flows related to the UE 1 to bit information (for example, 11 bits) in a one-to-one manner, the PFIs of the three QoS flows between the UE 1 and the UE 3 are respectively mapped to 00000000000, 00000000001, and 00000000010, and the PFIs of the two QoS flows between the UE 1 and the UE 4 are respectively mapped to 00000000011 and 00000000100. Similarly, the UE 2 may map the PFIs of the two QoS flows related to the UE 2 to bit information (for example, 11 bits) in a one-to-one manner, the PFI #1 between the UE 2 and the UE 3 is mapped to 00000000000, and the PFI #1 between the UE 2 and the UE 4 is mapped to 00000000001.

It should be understood that the first indication information only needs to uniquely indicate the E2E QoS flow within the scope of the first terminal device. A form of the first indication information is not limited in this application.

The identifier of the third terminal device may be a layer-2 identifier (layer-2 identifier, L2 ID).

It should be understood that the layer-2 identifier is a common UE identifier in SL unicast communication, and the layer-2 identifier may be used to reuse a current protocol, which is simple and efficient.

Optionally, the identifier of the third terminal device may alternatively be a local identifier (local ID), and the local identifier is determined by the second terminal device.

Optionally, "the first indication information and the identifier of the third terminal device" in the first message may be understood as a group of information, for example, denoted as first information. A quantity of pieces of first information in the first message is determined based on a quantity of third terminal devices.

For example, there may be N (N is a positive integer) third terminal devices. In other words, the first terminal device may communicate with the N third terminal devices via the second terminal device. In this case, the first message may include N pieces of first information, and each piece of first information includes first indication information and an identifier of one third terminal device. Alternatively, the first message carries a list, a quantity of entries in the list is determined by a quantity of third terminal devices, and each entry includes an identifier of one third terminal device and first indication information corresponding to the third terminal device.

After receiving the first message, the second terminal device may determine a correspondence between the identifier of the third terminal device and the first indication information, and store the correspondence.

The scenario in Example 1 is still used as an example for description. In this scenario, the third terminal device includes the UE 3 and the UE 4, that is, N=2. Therefore, the list of the first message may include two entries: {L2 ID of the UE 3, {QFI #1, QoS parameter}, {QFI #2, QoS parameter}, {QFI #3, QoS parameter} }, and {L2 ID of the UE 4, {QFI #4, QoS parameter}, {QFI #5, QoS parameter}}. Each entry is an example of the first information. The second terminal device may determine, based on the first message, that the UE 3 corresponds to the QFIs #1 to #3, and the UE 4 corresponds to the QFIs #4 and #5. The correspondence stored by the second terminal device may be shown in Table 1.

**Table 1**

| Remote UE ID | Remote UE ID | QFI |
|---|---|---|
| 1 | 3 | 1 |
| 1 | 3 | 2 |
| 1 | 3 | 3 |
| 1 | 4 | 4 |
| 1 | 4 | 5 |

For example, the first message is a sidelink user information request (UEInformationRequestSidelink) message, or a PC5 RRC message.

S320: The first terminal device sends a first correspondence to the second terminal device, and correspondingly, the second terminal device receives the first correspondence.

The first correspondence is a correspondence between the first indication information and a PC5 configuration index (PC5 config index).

In this application, the PC5 configuration index identifies an SLRB configuration (denoted as a first SLRB configuration) between the first terminal device and the third terminal device. The first SLRB configuration may be used to determine a first SLRB. In other words, the first SLRB may be established between the first terminal device and the third terminal device based on the first SLRB configuration, and the first SLRB is an SLRB between the first terminal device and the third terminal device, that is, an E2E SLRB.

It should be understood that, in an L2 U2U relay scenario, the PC5 config index is unique per destination. It may be understood as that the PC5 config index uniquely indicates one SLRB configuration between the first terminal device and the third terminal device.

It should be understood that the first QoS flow may be mapped to the first SLRB, that is, there is a mapping relationship between the first QoS flow and the first SLRB, and the first SLRB configuration may be used to determine the first SLRB. Therefore, the first terminal device may determine a mapping relationship between the first QoS flow and the first SLRB configuration, and indicate the mapping relationship based on the first correspondence.

For example, the scenario in Example 1 is still used as an example for description. In this scenario, if there are two SLRB configurations between the UE 1 and the UE 3, PC5 configuration indexes of the two SLRB configurations are respectively an index #1 and an index #2, and between the UE 1 and the UE 3, the PFI #1 is mapped to the index #1, and the PFI #2 and the PFI #3 are mapped to the index #2. There is one SLRB configuration between the UE 1 and the UE 4, a PC5 configuration index of the SLRB configuration is an index #1, and both the PFI #1 and the PFI #2 between the UE 1 and the UE 4 are mapped to the index #1. In this case, the first correspondence may be: {Index #1, {QFI #1}}, {Index #2, {QFI #2, QFI #3}}, and {Index #1, {QFI #4, QFI #5}}. The first correspondence may be understood as a mapping list (mapping list) of the first indication information and the PC5 configuration index. For example, refer to Table 2.

**Table 2**

| QFI | PC5 configuration index |
|---|---|
| 1 | 1 |
| 2 | 2 |
| 3 | 2 |
| 4 | 1 |
| 5 | 1 |

For example, the first correspondence is carried in a third message, and the third message is an RRC reconfiguration message.

S330: The second terminal device determines a correspondence between the PC5 configuration index and the third terminal device based on the first message and the first correspondence.

Specifically, the second terminal device may associate the third terminal device with the PC5 configuration index in a one-to-one manner based on the first indication information.

For example, based on Table 1 and Table 2, the second terminal device may determine that the index #1 corresponding to the QFI #1, and the index #2 corresponding to the QFI #2 and the QFI #3 represent the SLRB configurations between the UE 1 and the UE 3, and the index #1 corresponding to the QFI #4 and the QFI #5 represents the SLRB configuration between the UE 1 and the UE 4.

Based on the foregoing solution, the second terminal device can associate the SLRB configuration between the first terminal device and the third terminal device with the corresponding third terminal device based on the first indication information and the first correspondence, so that when the SLRB configuration is subsequently obtained, the third terminal device corresponding to the configuration can be determined. This ensures normal execution of a control plane procedure, and ensures normal communication between the first terminal device and the third terminal device.

In addition, in the foregoing solution, there is also a correspondence between the first indication information and the third terminal device. The second terminal device can further associate the first QoS flow with the third terminal device based on the first indication information, so that a subsequent control plane procedure is executed. This ensures normal communication between the first terminal device and the third terminal device.

Optionally, the first message further includes a QoS parameter corresponding to the first QoS flow. The method 300 further includes: S340: The second terminal device sends a second message to the first terminal device, and correspondingly, the first terminal device receives the second message.

The second message includes a first packet delay budget and the first indication information, the first packet delay budget is determined based on the QoS parameter, the first packet delay budget indicates a packet delay budget corresponding to the first QoS flow on a first link, and the first link is a link between the first terminal device and the second terminal device.

In this application, the QoS parameter includes parameters such as a PC5 5G QoS identifier (PC5 5G QoS Identifier, PQI), a priority, a packet delay budget (packet delay budget, PDB), and a packet error rate.

As shown in S206, the second terminal device may determine a PDB, or referred to as a first-hop PDB, that is, the first packet delay budget, on the first link based on the QoS parameter corresponding to the first QoS flow. Further, the second terminal device may send the first packet delay budget and the first indication information to the first terminal device based on the second message.

It should be understood that if the first indication information is a QFI, both the QoS parameter corresponding to the first QoS flow and the QFI may be referred to as QoS information of the first QoS flow, in other words, the first message may include the QoS information of the first QoS flow.

The scenario in Example 1 is still used as an example for description. In this scenario, if the second terminal device determines that a first PDB of a QoS flow corresponding to the QFI #1 is a PDB parameter #1, a first PDB of a QoS flow corresponding to the QFI #2 is a PDB parameter #2, a first PDB of a QoS flow corresponding to the QFI #3 is a PDB parameter #3, a first PDB of a QoS flow corresponding to the QFI #1 is a PDB parameter #4, and a first PDB of a QoS flow corresponding to the QFI #5 is a PDB parameter #5, the second message may include {QFI #1, PDB parameter #1}, {QFI #2, PDB parameter #2}, {QFI #3, PDB parameter #3}, {QFI #4, PDB parameter #4}, and {QFI #5, PDB parameter #5}.

For example, the second message is a sidelink user information response (UEInformationResponseSidelink) message, or a PC5 RRC message.

Optionally, the method 300 further includes: S350: The first terminal device determines a correspondence between the first packet delay budget and the first QoS flow based on the first indication information.

Specifically, the first terminal device may associate the first PDB with the first QoS flow in a one-to-one manner based on the first indication information.

The scenario in Example 1 is still used as an example for description. Based on the first message and the second message, the UE 1 may respectively associate PDB parameters #1 to #3 with the PFIs #1 to #3 between the UE 1 and the UE 3, and associate PDB parameters #4 and #5 with the PFIs #1 and #2 between the UE 1 and the UE 4.

It should be understood that the correspondence between the first packet delay budget and the first QoS flow may be used to determine the PC5 configuration index in the first correspondence.

Specifically, the first terminal device may determine the first SLRB configuration based on the QoS flow parameter corresponding to the first QoS flow and the first PDB, where the first SLRB configuration includes the PC5 configuration index. A specific manner of determining the SLRB configuration is not limited in this application.

Based on the foregoing solution, the first terminal device may determine the correspondence between the first packet delay budget and the first QoS flow based on the first indication information, so that a subsequent control plane procedure is normally executed.

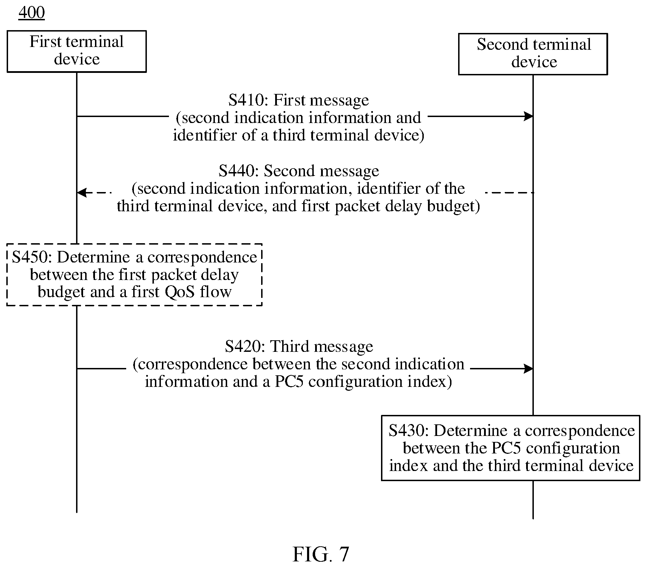

FIG. 7 is a schematic flowchart of a sidelink communication method 400 according to this application. The method 400 may include the following steps.

S410: A first terminal device sends a first message to a second terminal device, and correspondingly, the second terminal device receives the first message.

The first message includes second indication information and an identifier of a third terminal device.

It should be understood that, for a relationship between the first terminal device, the second terminal device, and the third terminal device, refer to the descriptions in S310. Details are not described herein again.

The second indication information indicates, within a scope of the third terminal device, a first QoS flow, and the first QoS flow is a QoS flow between the first terminal device and the third terminal device.

For descriptions of the first QoS flow, refer to S310. Details are not described herein again.

The second indication information may be understood as uniquely indicating, within the scope of the third terminal device, an E2E QoS flow, or uniquely indicating, between the first terminal device and the third terminal device, an E2E QoS flow.

For example, the first terminal device includes a UE 1, and the third terminal device includes a UE 3 and a UE 4. There are three QoS flows between the UE 1 and the UE 3, and there are two QoS flows between the UE 1 and the UE 4. In this case, the three QoS flows between the UE 1 and the UE 3 may be indicated by using different second indication information, that is, are unique within a scope of the UE 3, and do not mutually conflict. The two QoS flows between the UE 1 and the UE 4 may be indicated by using different second indication information, that is, are unique within a scope of the UE 4, and do not conflict with each other.

For example, the second indication information is a PFI.

For example (denoted as Example 2), the first terminal device includes a UE 1, and the third terminal device includes a UE 3 and a UE 4. There are three QoS flows between the UE 1 and the UE 3, and PFIs of the three QoS flows are respectively a PFI #1, a PFI #2, and a PFI #3. There are two QoS flows between the UE 1 and the UE 4, and PFIs of the two QoS flows are respectively a PFI #1 and a PFI #2. In this case, the second indication information may be the foregoing PFIs #1 to #3 and PFIs #1 and #2.

It should be understood that the second indication information only needs to uniquely indicate the E2E QoS flow within the scope of the third terminal device. A form of the second indication information is not limited in this application.

The identifier of the third terminal device may be an L2 ID or a local identifier determined by the second terminal device.

For example, the first message is a sidelink user information request (UEInformationRequestSidelink) message, or a PC5 RRC message.

It should be understood that, for the identifier of the third terminal device and the first message, refer to the descriptions in S310. Details are not described herein again.

Optionally, "the second indication information and the identifier of the third terminal device" in the first message may be understood as a group of information, for example, denoted as second information. A quantity of pieces of second information in the first message is determined based on a quantity of third terminal devices.

For example, there may be N (N is a positive integer) third terminal devices. In other words, the first terminal device may communicate with the N third terminal devices via the second terminal device. In this case, the first message may include N pieces of second information, and each piece of second information includes second indication information and an identifier of one third terminal device. Alternatively, the first message carries a list, a quantity of entries in the list is determined by a quantity of third terminal devices, and each entry includes an identifier of one third terminal device and first indication information corresponding to the third terminal device.

After receiving the first message, the second terminal device may determine a correspondence between the identifier of the third terminal device and the first indication information, and store the correspondence.

The scenario in Example 2 is still used as an example for description. In this scenario, the third terminal device includes the UE 3 and the UE 4, that is, N=2. Therefore, the list of the first message may include two entries: {L2 ID of the UE 3, {PFI #1, QoS parameter}, {PFI #2, QoS parameter}, {PFI #3, QoS parameter}}, and {L2 ID of the UE 4, {PFI #1, QoS parameter}, {PFI #2, QoS parameter}}. Each entry is an example of the second information. The second terminal device may determine, based on the first message, that the UE 3 corresponds to the PFIs #1 to #3, and the UE 4 corresponds to the PFIs #4 and #5. The correspondence stored by the second terminal device may be shown in Table 3.

**Table 3**

| Remote UE ID | Remote UE ID | PFI |
|---|---|---|
| 1 | 3 | 1 |
| 1 | 3 | 2 |
| 1 | 3 | 3 |
| 1 | 4 | 1 |
| 1 | 4 | 2 |

S420: The first terminal device sends a third message to the second terminal device, and correspondingly, the second terminal device receives the third message.

The third message includes the identifier of the third terminal device and a second correspondence, and the second correspondence is a correspondence between the second indication information and a PC5 configuration index. The second correspondence may be understood as a mapping list (mapping list) of the second indication information and the PC5 configuration index.

The PC5 configuration index identifies an SLRB configuration between the first terminal device and the third terminal device. For descriptions of the PC5 configuration index, refer to S320. Details are not described herein again.

It should be understood that, for definitions of the first QoS flow, a first SLRB configuration, and a first SLRB, and a relationship between the first QoS flow, the first SLRB configuration, and the first SLRB, refer to the method 300. Details are not described herein again. The first terminal device may determine a mapping relationship between the first QoS flow and the first SLRB configuration, and indicate the mapping relationship based on the second correspondence.

Optionally, "the identifier of the third terminal device and the second correspondence" in the third message may be understood as a group of information, for example, denoted as third information. A quantity of pieces of third information in the third message is determined based on a quantity of third terminal devices.

For example, there may be N (N is a positive integer) third terminal devices. In other words, the first terminal device may communicate with the N third terminal devices via the second terminal device. In this case, the third message may include N pieces of third information, and each piece of third information includes an identifier of one third terminal device and a second correspondence. Alternatively, the third message carries a list, a quantity of entries in the list is determined by a quantity of third terminal devices, and each entry includes an identifier of one third terminal device and a second correspondence corresponding to the third terminal device.

For example, the scenario in Example 2 is still used as an example for description. In this scenario, if there are two SLRB configurations between the UE 1 and the UE 3, PC5 configuration indexes of the two SLRB configurations are respectively an index #1 and an index #2, and between the UE 1 and the UE 3, the PFI #1 is mapped to the index #1, and the PFI #2 and the PFI #3 are mapped to the index #2. There is one SLRB configuration between the UE 1 and the UE 4, a PC5 configuration index of the SLRB configuration is an index #1, and both the PFI #1 and the PFI #2 between the UE 1 and the UE 4 are mapped to the index #1. In this case, N=2, and the third message may include two entries: {L2 ID of the UE 3, {Index #1, {PFI #1}}, {Index #2, {PFI #2, PFI #3}}}, and {L2 ID of the UE 4, {Index #1, {PFI #1, PFI #2} } }. Each entry is an example of the third information. The second correspondence may be: {Index #1, {PFI #1}}, {Index #2, {PFI #2, PFI #3}}, and {Index #1, {PFI #2, PFI #2}}. For example, refer to Table 4.

**Table 4**

| Remote UE ID | Remote UE ID | PFI | Config index |
|---|---|---|---|
| 1 | 3 | 1 | 1 |
| 1 | 3 | 2 | 2 |
| 1 | 3 | 3 | 2 |
| 1 | 4 | 1 | 1 |
| 1 | 4 | 2 | 1 |

For example, the third message is an RRC reconfiguration message.

S430: The second terminal device determines a correspondence between the PC5 configuration index and the third terminal device based on the first message and the third message.

Specifically, the second terminal device may associate the third terminal device with the PC5 configuration index in a one-to-one manner based on the identifier of the third terminal device and the second indication information.

For example, based on Table 1 and Table 4, the second terminal device may determine that the index #1 corresponding to the PFI #1, and the index #2 corresponding to the PFI #2 and the PFI #3 represent the SLRB configurations between the UE 1 and the UE 3, and the index #1 corresponding to the PFI #1 and the PFI #2 represents the SLRB configuration between the UE 1 and the UE 4.

Based on the foregoing solution, the second terminal device can associate the SLRB configuration between the first terminal device and the third terminal device with the corresponding third terminal device based on the second indication information and the second correspondence, so that when the SLRB configuration is subsequently obtained, the third terminal device corresponding to the configuration can be determined. This ensures correct execution of a control plane procedure, and ensures normal communication between the first terminal device and the third terminal device.

In addition, in the foregoing solution, there is also a correspondence between the second indication information and the third terminal device. The second terminal device can further associate the first QoS flow with the third terminal device based on the second indication information, so that a subsequent control plane procedure is executed. This ensures normal communication between the first terminal device and the third terminal device.

Optionally, the first message further includes a QoS parameter corresponding to the first QoS flow. The method 400 further includes: S440: The second terminal device sends a second message to the first terminal device, and correspondingly, the first terminal device receives the second message.

The second message includes a first packet delay budget, the identifier of the third terminal device, and the second indication information.

For descriptions of the first packet delay budget, refer to S340. Details are not described herein again.

As shown in S206, the second terminal device may determine a PDB, or referred to as a first-hop PDB, that is, the first packet delay budget, on the first link based on the QoS parameter corresponding to the first QoS flow. Further, the second terminal device may send the first packet delay budget, the identifier of the third terminal device, and the second indication information to the first terminal device based on the second message.

It should be understood that if the second indication information is a PFI, both the QoS parameter corresponding to the first QoS flow and the PFI may be referred to as QoS information of the first QoS flow, in other words, the first message may include the QoS information of the first QoS flow.

Optionally, "the identifier of the third terminal device and the second indication information" in the second message may be understood as a group of information, for example, denoted as fourth information. A quantity of pieces of fourth information in the second message is determined based on a quantity of third terminal devices.

For example, there may be N (N is a positive integer) third terminal devices. In other words, the first terminal device may communicate with the N third terminal devices via the second terminal device. In this case, the second message may include N pieces of fourth information, and each piece of fourth information includes an identifier of one third terminal device and second indication information. Alternatively, the second message carries a list, a quantity of entries in the list is determined by a quantity of third terminal devices, and each entry includes an identifier of one third terminal device and second indication information corresponding to the third terminal device.

The scenario in Example 2 is still used as an example for description. In this scenario, if the second terminal device determines that first PDBs of QoS flows identified by the PFI #1, the PFI #2, and the PFI #3 between the UE 1 and the UE 3 are respectively a PDB parameter #1, a PDB parameter #2, and a PDB parameter #3, and first PDBs of QoS flows identified by the PFI #1 and the PFI #2 between the UE 1 and the UE 4 are respectively a PDB parameter #4 and a PDB parameter #5, the second message may include two entries: {L2 ID of the UE 3, {PFI #1, PDB parameter #1}, {PFI #2, PDB parameter #2}, {PFI #3, PDB parameter #3}}, and {L2 ID of the UE 4, {PFI #1, PDB parameter #4}, {PFI #2, PDB parameter #5}}. Each entry is an example of the fourth information.

For example, the second message is a sidelink user information response (UEInformationResponseSidelink) message, or a PC5 RRC message.

Optionally, the method 400 further includes: S450: The first terminal device determines a correspondence between the first packet delay budget and the first QoS flow based on the second indication information.

Specifically, the first terminal device may associate the first PDB with the first QoS flow in a one-to-one manner based on the identifier of the third terminal device and the second indication information.

The scenario in Example 2 is still used as an example for description. Based on the first message and the second message, the UE 1 may associate PDB parameters #1 to #3 in the first entry with the PFIs #1 to #3 between the UE 1 and the UE 3, and the UE 1 associates PDB parameters #4 and #5 in the second entry with the PFIs #1 and #2 between the UE 1 and the UE 4.

It should be understood that the correspondence between the first packet delay budget and the first QoS flow may be used to determine the PC5 configuration index in the second correspondence.

Specifically, the first terminal device may determine the first SLRB configuration based on the QoS flow parameter corresponding to the first QoS flow and the first PDB, where the first SLRB configuration includes the PC5 configuration index. A specific manner of determining the SLRB configuration is not limited in this application.

Based on the foregoing solution, the first terminal device may determine the correspondence between the first packet delay budget and the first QoS flow based on the second indication information and the identifier of the third terminal device, so that a subsequent control plane procedure is normally executed.

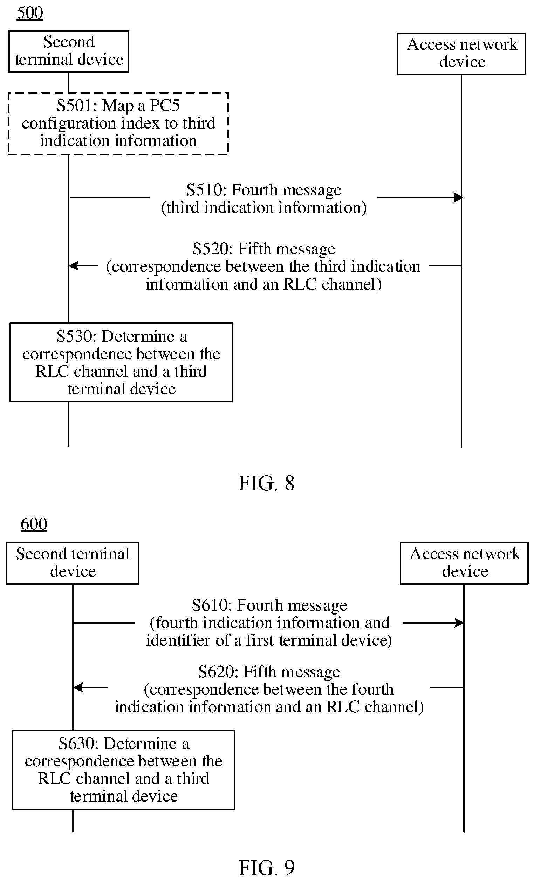

FIG. 8 is a schematic flowchart of a sidelink communication method 500 according to this application. The method 500 may include the following steps.

S510: A second terminal device sends a fourth message to an access network device, and correspondingly, the access network device receives the fourth message.

The fourth message includes third indication information, the third indication information identifies, between the second terminal device and the access network device, a first SLRB, and the first SLRB is an SLRB between a first terminal device and a third terminal device.

It should be understood that, for a relationship between the first terminal device, the second terminal device, and the third terminal device, refer to the descriptions in S310. Details are not described herein again.

The third indication information may be understood as uniquely identifying, between the second terminal device and the access network device, the first SLRB, or uniquely identifying, within a scope of the second terminal device, the first SLRB. The third indication information may be referred to as an SLRB index (SLRB Index).

For example (denoted as Example 3), the first terminal device includes a UE 1 and a UE 2, and the third terminal device includes a UE 3 and a UE 4. There are two SLRBs between the UE 1 and the UE 3, and PC5 configuration indexes of the two SLRBs are respectively an index #1 and an index #2. There is one SLRB between the UE 1 and the UE 4, and a PC5 configuration index of the SLRB is an index #1. There are two SLRBs between the UE 2 and the UE 3, and PC5 configuration indexes of the two SLRBs are respectively an index #1 and an index #2. In this case, the second terminal device may respectively identify the five SLRBs by using an SLRB index #1, an SLRB index #2, an SLRB index #3, an SLRB index #4, and an SLRB index #5. The second terminal device may store a correspondence between the PC5 configuration index, the SLRB index, the first terminal device, and the third terminal device, as shown in Table 5.

**Table 5**

| Remote UE ID | Remote UE ID | PC5 configuration index | SLRB index |
|---|---|---|---|
| 1 | 3 | 1 | 1 |
| 1 | 3 | 2 | 2 |
| 1 | 4 | 1 | 3 |
| 2 | 3 | 1 | 4 |
| 2 | 3 | 2 | 5 |

It should be understood that the first terminal device and the second terminal device may perform the method 300 or the method 400, to obtain the correspondence between the PC5 configuration index and the remote UE.

The access network device is a serving base station of the second terminal device, and the fourth message may be an SUI message.

The fourth message may further include an identifier of the third terminal device.

Optionally, the fourth message includes a QoS parameter at an SLRB granularity.

It should be understood that the second terminal device may aggregate, based on a mapping relationship between a first QoS flow and the first SLRB, second-hop QoS parameters into the QoS parameter at the SLRB granularity, that is, a QoS parameter that needs to be met by an E2E SLRB on a second hop, and further include the QoS parameter in the fourth message.

S520: The access network device sends a fifth message to the second terminal device, and correspondingly, the second terminal device receives the fifth message.

The fifth message includes a third correspondence, and the third correspondence is a correspondence between the third indication information and an RLC channel.

Specifically, the access network device may determine the RLC channel for each SLRB, and indicate the RLC channel to the second terminal device based on the third correspondence.

It should be understood that the access network device may determine an SRAP configuration based on the QoS parameter in the fourth message. The SRAP configuration includes a mapping relationship between the SLRB and the RLC channel. The third correspondence may be understood as the mapping relationship between the SLRB and the RLC channel. Further, the access network device may include the SRAP configuration in the fifth message.

It should be further understood that the SRAP configuration is a configuration between the second terminal device and the third terminal device. Therefore, the RLC channel is an RLC channel between the second terminal device and the third terminal device, that is, a second-hop RLC channel.

The scenario in Example 3 is still used as an example for description. In this scenario, if the access network device determines that SLRBs identified by SLRB indexes #1, #2, and #4 are all mapped to an RLC channel ID #1, an SLRB identified by the SLRB index #3 is mapped to an RLC channel ID #2, and an SLRB identified by the SLRB index #5 is mapped to an RLC channel ID #3, the fifth message includes {SLRB index #1, RLC channel ID #1}, {SLRB index #2, RLC channel ID #1}, {SLRB index #3, RLC channel ID #2}, {SLRB index #4, RLC channel ID #1}, and {SLRB index #5, RLC channel ID #3}.

For example, the fifth message is an RRC reconfiguration message of a Uu interface.

S530: The second terminal device determines a correspondence between the RLC channel and the third terminal device based on the third indication information and the third correspondence.

Specifically, the second terminal device may associate the RLC channel with the third terminal device in a one-to-one manner based on the third indication information.

The scenario in Example 3 is still used as an example for description. Based on the fourth message and the fifth message, the second terminal device may determine that the index #1 and the index #2 between the UE 1 and the UE 3 are mapped to the RLC channel ID #1, the index #1 between the UE 1 and the UE 4 is mapped to the RLC channel ID #2, the index #1 between the UE 2 and the UE 3 is mapped to the RLC channel ID #1, and the index #2 between the UE 2 and the UE 2 is mapped to the RLC channel ID #3. Further, a bearer (bearer) ID is defined as five least significant bits of the PC5 configuration index. In an L2 U2U relay scenario, it may be considered that a value of the PC5 configuration index is the same as a value of the bearer identifier. Therefore, the second terminal device may determine a correspondence between the bearer ID, the RLC channel ID, the first terminal device, and the third terminal device, as shown in Table 6.

**Table 6**

| Remote UE ID | Remote UE ID | Bearer ID | RLC channel ID |
|---|---|---|---|
| 1 | 3 | 1 | 1 |
| 1 | 3 | 2 | 1 |
| 1 | 4 | 1 | 2 |
| 2 | 3 | 1 | 1 |
| 2 | 3 | 2 | 3 |

Based on the foregoing solution, the second terminal device can associate the RLC channel with the corresponding first terminal device based on the third indication information and the third correspondence, so that in subsequent data transmission, an RLC channel corresponding to a data packet can be determined. This ensures normal execution of a data plane procedure, and ensures normal communication between the first terminal device and the third terminal device.

Optionally, the method 500 further includes: S501: The second terminal device maps a PC5 configuration index to the third indication information, where the PC5 configuration index identifies an SLRB configuration between the first terminal device and the third terminal device.

Specifically, the second terminal device may map the PC5 configuration index to the third indication information in a one-to-one manner, and store a correspondence between the PC5 configuration index, the third indication information, the first terminal device, and the third terminal device.

The scenario in Example 3 is still used as an example for description. In this scenario, the second terminal device may map the PC5 config indexes of the five SLRBs to SLRB indexes in a one-to-one manner. That is, the PC5 config indexes of the two SLRBs between the UE 1 and the UE 3 are respectively mapped to the SLRB index #1 and the SLRB index #2, the PC5 config index of the SLRB between the UE 1 and the UE 4 is mapped to the SLRB index #3, and the PC5 config indexes of the two SLRBs between the UE 2 and the UE 3 are respectively mapped to the SLRB index #4 and the SLRB index #5.

Based on the foregoing solution, the PC5 configuration indexes are mapped to the third indication information in a one-to-one manner, so that the third indication information can uniquely identify, between the second terminal device and the access network device, the first SLRB, which is simple and efficient.

FIG. 9 is a schematic flowchart of a sidelink communication method 600 according to this application. The method 600 may include the following steps.

S610: A second terminal device sends a fourth message to an access network device, and correspondingly, the access network device receives the fourth message.

The fourth message includes fourth indication information and an identifier of a first terminal device.

The fourth indication information identifies, on a first unicast connection, a first SLRB, the first unicast connection is a unicast connection between the first terminal device and a third terminal device, and the first SLRB is an SLRB between the first terminal device and the third terminal device.

The fourth indication information may be understood as uniquely identifying, between the first terminal device and the third terminal device, the first SLRB, or uniquely identifying, within a scope of the third terminal device, the first SLRB. The fourth indication information may be referred to as an SLRB index.

The fourth indication information may alternatively be understood as an SLRB uniquely identifying an E2E unicast connection between the second terminal device and the access network device.

For example (denoted as Example 4), the first terminal device includes a UE 1 and a UE 2, and the third terminal device includes a UE 3 and a UE 4. There are two SLRBs between the UE 1 and the UE 3, and PC5 configuration indexes of the two SLRBs are respectively an index #1 and an index #2. There is one SLRB between the UE 1 and the UE 4, and a PC5 configuration index of the SLRB is an index #1. There are two SLRBs between the UE 2 and the UE 3, and PC5 configuration indexes of the two SLRBs are respectively an index #1 and an index #2. In this case, there are two SLRBs between the UE 1 and the UE 3, and the two SLRBs may be indicated by using different fourth indication information, that is, are unique within a scope of the UE 3. For example, the second terminal device determines the two SLRBs as an SLRB index #1 and an SLRB index #2. There are two SLRBs between the UE 2 and the UE 3, and the two SLRBs may be indicated by using different fourth indication information, that is, are unique within the scope of the UE 3. For example, the second terminal device determines the two SLRBs as an SLRB index #1 and an SLRB index #2. There is one SLRB between the UE 1 and the UE 4, and the SLRB may independently determine the fourth indication information, that is, is unique within a scope of the UE 4. For example, the second terminal device determines the SLRB as an SLRB index #1. The second terminal device may store a correspondence between the PC5 configuration index, the SLRB index, the first terminal device, and the third terminal device, as shown in Table 7.

**Table 7**

| Remote UE ID | Remote UE ID | PC5 configuration index | SLRB index |
|---|---|---|---|
| 1 | 3 | 1 | 1 |
| 1 | 3 | 2 | 2 |
| 1 | 4 | 1 | 1 |
| 2 | 3 | 1 | 1 |
| 2 | 3 | 2 | 2 |

It should be understood that in the method 600, the second terminal device may set a value of the SLRB index to a value the same as that of the PC5 configuration index, that is, the value of the SLRB index=the value of the PC5 configuration index.

The access network device is a serving base station of the second terminal device, and the fourth message may be an SUI message.

The identifier of the first terminal device may be an L2 ID or a local identifier determined by the second terminal device.

The fourth message may further include an identifier of the third terminal device.

Optionally, the fourth message includes a QoS parameter at an SLRB granularity.

It should be understood that the second terminal device may aggregate, based on a mapping relationship between a first QoS flow and the first SLRB, second-hop QoS parameters into the QoS parameter at the SLRB granularity, that is, a QoS parameter that needs to be met by an E2E SLRB on a second hop, and further include the QoS parameter in the fourth message.

Optionally, "the fourth indication information and the identifier of the first terminal device" in the fourth message may be understood as a group of information, for example, denoted as fifth information. A quantity of pieces of fifth information in the fourth message is determined based on a quantity of first terminal devices.

For example, there may be M (M is a positive integer) first terminal devices. In other words, the M first terminal devices may communicate with one third terminal device via the second terminal device. In this case, the fourth message may include the identifier of the third terminal device and M pieces of fifth information, and each piece of fifth information includes fourth indication information and an identifier of one first terminal device. Alternatively, the fourth message carries a list, a quantity of entries in the list is determined by a quantity of first terminal devices, and each entry includes an identifier of one first terminal device and fourth indication information corresponding to the first terminal device.

The scenario in Example 4 is still used as an example for description. In this scenario, for the UE 3, the first terminal device includes the UE 1 and the UE 2, that is, M=2. Therefore, the list of the fourth message may include two entries: {L2 ID of the UE 1, {SLRB index #1, QoS parameter}, {SLRB index #2, QoS parameter}}, and {L2 ID of the UE 2, {SLRB index #1, QoS parameter 1}, {SLRB index #2, QoS parameter}}. For the UE 4, the first terminal device includes the UE 1, that is, M=1. Therefore, the fourth message may include one entry: {L2 ID of the UE 1, {SLRB index #1, QoS parameter}}. Each entry is an example of the fifth information. In conclusion, in the scenario provided in Example 4, the fourth message may be {L2 ID of the UE 3, {L2 ID of the UE 1, {SLRB index #1, QoS parameter}, {SLRB index #2, QoS parameter}}, {L2 ID of the UE 2, {SLRB index #1, QoS parameter 1}, {SLRB index #2, QoS parameter}}}, and {L2 ID of the UE 4, {L2 ID of the UE 1, {SLRB index #1, QoS parameter} }}.

S620: The access network device sends a fifth message to the second terminal device, and correspondingly, the second terminal device receives the fifth message.

The fifth message includes the identifier of the first terminal device and a fourth correspondence, and the fourth correspondence is a correspondence between the fourth indication information and an RLC channel.

Specifically, the access network device may determine the RLC channel for each SLRB, and indicate the RLC channel to the second terminal device based on the third correspondence.

It should be understood that the access network device may determine an SRAP configuration based on the QoS parameter in the fourth message. The SRAP configuration includes a mapping relationship between the SLRB and the RLC channel. The fourth correspondence may be understood as the mapping relationship between the SLRB and the RLC channel. Further, the access network device may include the SRAP configuration in the fifth message.

It should be further understood that the SRAP configuration is a configuration between the second terminal device and the third terminal device. Therefore, the RLC channel is an RLC channel between the second terminal device and the third terminal device, that is, a second-hop RLC channel.

Optionally, "the identifier of the first terminal device and the fourth correspondence" in the fifth message may be understood as a group of information, for example, denoted as sixth information. A quantity of pieces of sixth information in the fifth message is determined based on a quantity of first terminal devices.

For example, there may be M (M is a positive integer) first terminal devices. In other words, the M first terminal devices may communicate with one third terminal device via the second terminal device. In this case, the fifth message may include the identifier of the third terminal device and M pieces of sixth information, and each piece of sixth information includes fourth indication information and an identifier of one first terminal device. Alternatively, the fifth message carries a list, a quantity of entries in the list is determined by a quantity of first terminal devices, and each entry includes an identifier of one first terminal device and fourth indication information corresponding to the first terminal device.

The scenario in Example 4 is still used as an example for description. In this scenario, the access network device determines that the index #1 and the index #2 between the UE 1 and the UE 3 are mapped to an RLC channel ID #1, the index #1 between the UE 1 and the UE 4 is mapped to an RLC channel ID #2, the index #1 between the UE 2 and the UE 3 is mapped to the RLC channel ID #1, and the index #2 between the UE 2 and the UE 3 is mapped to an RLC channel ID #3. In this case, for the UE 3, the first terminal device includes the UE 1 and the UE 2, that is, M=2. Therefore, the list of the fifth message may include two entries: {L2 ID of the UE 1, {SLRB index #1, RLC channel ID #1}, {SLRB index #2, RLC channel ID #1}}, and {L2 ID of the UE 2, {SLRB index #1, RLC channel ID #1}, {SLRB index #2, RLC channel ID #3}}. For the UE 4, the first terminal device includes the UE 1, that is, M=1. Therefore, the fifth message may include one entry: {L2 ID of the UE 1, {SLRB index #1, RLC channel ID #2} }. Each entry is an example of the sixth information. In conclusion, in the scenario provided in Example 4, the fifth message includes {L2 ID of the UE 3, {L2 ID of the UE 1, {SLRB index #1, RLC channel ID #1}, {SLRB index #2, RLC channel ID #1}}, {L2 ID of the UE 2, {SLRB index #1, RLC channel ID #1}, {SLRB index #2, RLC channel ID #3}}}, and {L2 ID of the UE 4, {L2 ID of the UE 1, {SLRB index #1, RLC channel ID #2}}}.

The fifth message is an RRC reconfiguration message of a Uu interface.

S630: The second terminal device determines a correspondence between the RLC channel and the third terminal device based on the fourth indication information and the fifth message.

The second terminal device associates the RLC channel with the third terminal device in a one-to-one manner based on the fourth indication information and the identifier of the first terminal device.

The scenario in Example 3 is still used as an example for description. Based on the fourth indication information and the identifier of the first terminal device, the second terminal device may determine that the index #1 and the index #2 between the UE 1 and the UE 3 are mapped to the RLC channel ID #1, the index #1 between the UE 1 and the UE 4 is mapped to the RLC channel ID #2, the index #1 between the UE 2 and the UE 3 is mapped to the RLC channel ID #1, and the index #2 between the UE 2 and the UE 2 is mapped to the RLC channel ID #3. Further, a bearer (bearer) ID is defined as five least significant bits of the PC5 configuration index. In an L2 U2U relay scenario, it may be considered that a value of the PC5 configuration index is the same as a value of the bearer identifier. Therefore, the second terminal device may determine a correspondence between the bearer ID, the RLC channel ID, the first terminal device, and the third terminal device, as shown in Table 6.

Based on the foregoing solution, the second terminal device can associate the RLC channel with the corresponding first terminal device based on the fourth indication information and the fourth correspondence, so that in subsequent data transmission, an RLC channel corresponding to a data packet can be determined. This ensures normal execution of a data plane procedure, and ensures normal communication between the first terminal device and the third terminal device.

Optionally, the method 500 or the method 600 further includes: The first terminal device sends a data packet to the second terminal device, and correspondingly, the second terminal device receives the data packet.

The data packet carries an SRAP header, and the SRAP header includes local IDs of the first terminal device and the third terminal device and a bearer ID.

Optionally, the method 500 or the method 600 further includes: The second terminal device forwards the data packet.

Specifically, the second terminal device may forward data in the data packet based on the SRAP header of the data packet and the SRAP configuration in the fifth message. For example, the second terminal device determines L2 IDs of the first terminal device and the third terminal device based on the local IDs, to determine, based on the third correspondence, an RLC channel ID corresponding to the bearer ID, and then forward the data packet through an RLC channel corresponding to the RLC channel ID.

The scenario in Example 3 is still used as an example for description. For example, when the second terminal device receives a data packet from the UE 1, and an SRAP header of the data packet carry local IDs of the UE 1 and the UE 3 and a bearer ID #1, the second terminal device determines, based on Table 6, that the bearer ID #1 between the UE 1 and the UE 3 corresponds to the RLC channel ID #1, to forward data in the data packet to the UE 3 through an RLC channel corresponding to the RLC channel ID #1.

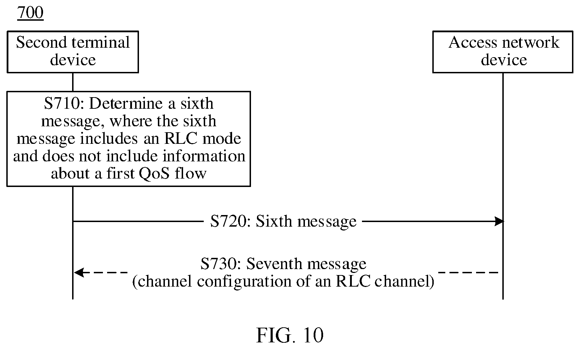

FIG. 10 is a schematic flowchart of a sidelink communication method 700 according to this application. The method 700 may include the following steps.

S710: A second terminal device determines a sixth message.

It should be understood that, for a relationship between a first terminal device, the second terminal device, and a third terminal device, refer to the descriptions in S310. Details are not described herein again.

The sixth message SUI message includes fifth indication information, and the fifth indication information indicates an RLC mode of an RLC channel between the first terminal device and the second terminal device.

Specifically, the RLC channel between the first terminal device and the second terminal device is established by the first terminal device, and an access network device has not configured the RLC channel for the second terminal device. In other words, in the method 700, the second terminal device serves as an RX UE between the second terminal device and the first terminal device.

It should be understood that the RLC mode may include an unacknowledged mode (unacknowledged mode, UM) and an acknowledged mode (Acknowledged Mode, AM). If an AM RLC channel is configured for the second terminal device, the second terminal device feeds back an RLC status report to the first terminal device. The RLC status report may indicate a data transmission status, for example, data packets that are successfully transmitted and data packets that are not successfully transmitted. If a UM RLC channel is configured for the second terminal device, the second terminal device does not feed back an RLC status report to the first terminal device.

In this application, the fifth indication information may indicate an RLC mode to which the RLC channel between the first terminal device and the second terminal device belongs.

In addition, when there are a plurality of RLC channels between the first terminal device and the second terminal device, the fifth indication information may be reported by using a list, and a quantity of entries in the list is the same as a quantity of RLC channels.

The sixth message does not include information about a first QoS flow, and the first QoS flow is a QoS flow between the first terminal device and the third terminal device.

Specifically, that the sixth message does not include the information about the first QoS flow may mean that the sixth message does not include a QoS information indication field, or that a QoS information indication field in the sixth message is an optional information element, and the QoS information indication field indicates the information about the first QoS flow.

In an example, the sixth message does not include the QoS information indication field, and an information element indicating the RLC mode in the sixth message may be shown as follows:

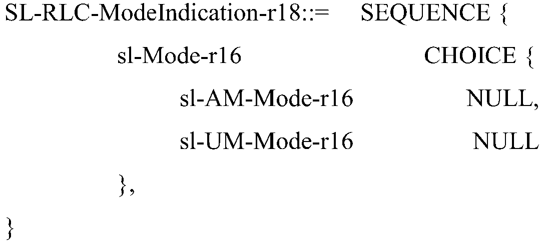

In another example, the QoS information indication field in the sixth message is an optional information element, and an information element indicating the RLC mode and the QoS information indication field in the sixth message may be shown as follows:

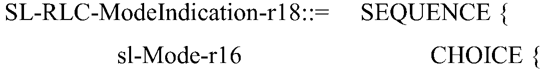

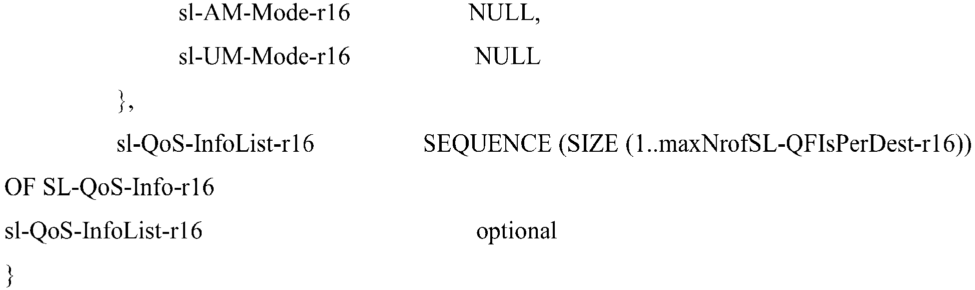

S720: The second terminal device sends the sixth message to the access network device, and correspondingly, the access network device receives the sixth message.

For example, the sixth message is used to obtain sidelink configuration information. For example, the sixth message is an SUI message.

Specifically, the second terminal device may indicate, to the access network device based on the fifth indication information, the RLC mode of the RLC channel between the first terminal device and the second terminal device, and the sixth message does not include the information about the first QoS flow.

It should be understood that in a U2U relay scenario, the second terminal device only forwards data, and does not generate data. Therefore, when the second terminal device serves as an RX UE to report the SUI, the second terminal device does not need to report QoS information of an E2E QoS flow.

Based on the foregoing solution, the second terminal device can correctly report the RLC mode when serving as an RX UE, so that a control plane procedure is normally executed, and normal communication between a source UE and a target UE can be ensured.

In addition, the method can avoid reporting redundant information, thereby reducing a waste of resources.

Optionally, the method further includes: S730: The access network device sends a seventh message to the second terminal device, and correspondingly, the second terminal device receives the seventh message.

The seventh message includes a channel configuration (channel config) of the RLC channel between the first terminal device and the second terminal device.

For example, the seventh message is an RRC reconfiguration message.

The following describes the method 700 in different cases.

Case 1: Before S710, the first terminal device configures an AM RLC channel for the second terminal device, and the AM RLC channel is established between the second terminal device and the first terminal device. In this case, a value of the fifth indication information carried in the sixth message is AM. In addition, the method 700 includes S730, that is, the access network device sends the channel configuration related to the RLC channel to the second terminal device, so that the second terminal device can feed back an RLC status report of the AM RLC channel to the first terminal device based on the channel configuration in the seventh message.

Case 2: Before S710, the first terminal device configures a UM RLC channel for the second terminal device, and the UM RLC channel is established between the second terminal device and the first terminal device. In this case, a value of the fifth indication information carried in the sixth message is UM. In addition, the method 700 may not include S730 because the second terminal device does not need to feed back an RLC status report to the first terminal device.

It should be understood that the second terminal device not only serves as an RX UE (at a first hop) between the first terminal device and the second terminal device, but also serves as a TX UE (at a second hop) between the second terminal device and the third terminal device. The method 300 and the method 400 show cases in which the second terminal device serves as an RX UE to obtain a link configuration from the first terminal device. The method 500 and the method 600 show cases in which the second terminal device serves as a TX UE to report an SUI message. The method 700 shows a case in which the second terminal device serves as a TX UE to report an SUI message. Therefore, the foregoing methods may be mutually combined. For example, the method 500, the method 600, and the method 700 may be performed after the method 300, or may be performed after the method 400.

In addition, an execution sequence of reporting the SUI message by the second terminal device serving as an RX UE and reporting the SUI message by the second terminal device serving as an RX UE is not limited in this application. In other words, an execution sequence of the method 500 (or the method 600) and the method 700 is not limited in this application, and the method 500 (or the method 600) and the method 700 may alternatively be performed at the same time. For example, after the second terminal device receives configuration information from the first terminal device (that is, after the method 300 or the method 400 is performed), the second terminal device serves as both an RX UE at the first hop and a TX UE at the second hop. Therefore, the second terminal device may send the fourth message (in the method 500 or the method 600) and the sixth message (in the method 700) at the same time. In this case, the access network device may also send the fifth message (in the method 500 or the method 600) and the seventh message (in the method 700) at the same time.

It should be further understood that SL communication may be bidirectional. In this application, after the first terminal device sends data to the third terminal device via the second terminal device, the third terminal device may also send data to the first terminal device via the second terminal device. In this case, the first terminal device, the second terminal device, and the third terminal device may not only execute a configuration procedure from the first terminal device to the third terminal device (denoted as a direction 1) (that is, the method 300 or the method 400, the method 500 or the method 600, and the method 700), but also execute a configuration procedure from the third terminal device to the first terminal device (denoted as a direction 2). The configuration procedure of the direction 2 is similar to the method 300 or the method 400, the method 500 or the method 600, and the method 700. A difference lies in that, if the configuration process of the direction 1 is first performed, and in the process, the access network device configures, for the second terminal device at the first hop, a sending-related RLC channel configuration (refer to the case 1 in the method 700), in the configuration process of the direction 2, the access network device may map an SLRB in the direction 2 to the RLC channel in an SRAP configuration, so that the RLC channel can be reused, thereby reducing a waste of resources.

In this application, the access network device communicating with the first terminal device, the access network device communicating with the second terminal device, and the access network device communicating with the third terminal device may be the same or may be different. This is not limited.

Optionally, the method 700 is described by using an example in which the second terminal device serves as an RX UE to report the SUI. The foregoing solution may be extended to a case in which a remote UE serves as an RX UE to report the SUI.

It should be understood that, when the access network device includes a CU and a DU, actions of receiving a message from and sending a message to the second terminal device by the access network device in FIG. 8 to FIG. 10 may be performed by the DU. After receiving a message sent by the second terminal device, the DU may forward the message to the CU, and the CU performs a processing action based on content of the message. When the DU sends a message to the second terminal device, the CU may first generate the message and forward the message to the DU, and then the DU forwards the message to the second terminal device. In addition, the CU may alternatively be configured to perform an action of message or data processing.

For example, in S510 described above, that the second terminal device sends the fourth message to the access network device specifically includes: The second terminal device sends the fourth message to the DU of the access network device. That the access network device receives the fourth message from the second terminal device specifically includes: The DU of the access network device receives the fourth message from the second terminal device. Specific processes of S610 and S720 described above are similar to a specific process of S510. Details are not described herein again.

For another example, in S520 described above, that the access network device sends the fifth message to the second terminal device specifically includes: The CU of the access network device generates the fifth message, and sends the fifth message to the DU of the access network device, and then the DU of the access network device forwards the fifth message to the second terminal device. That the second terminal device receives the fifth message from the access network device specifically includes: The second terminal device receives the fifth message sent by the DU of the access network device. A specific process of S620 described above is similar to a specific process of S520. Details are not described herein again.

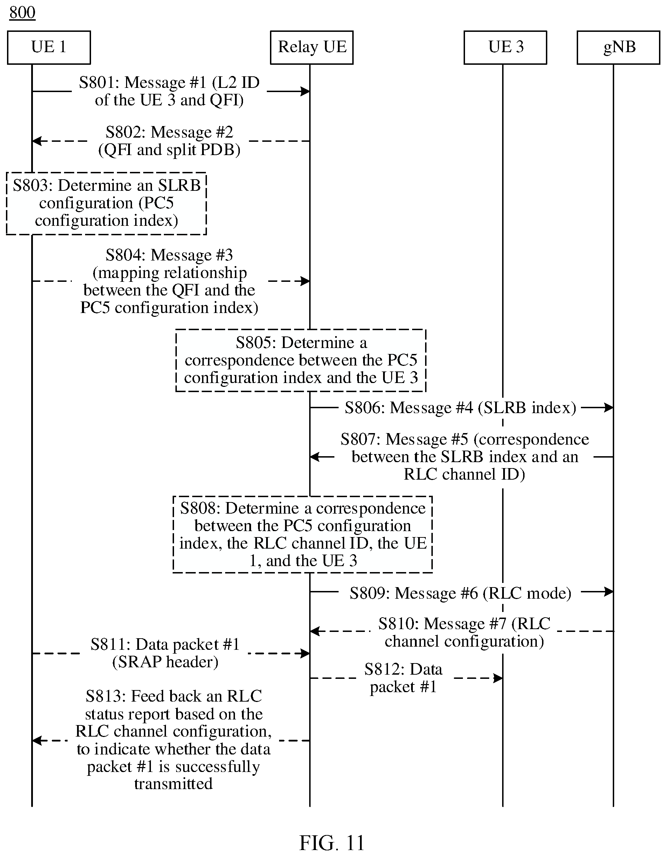

FIG. 11 is a schematic flowchart of a sidelink communication method 800 according to this application. The method 800 may be considered as a specific implementation of a combination of the method 300, the method 500, and the method 700. The method 800 may include the following steps.

S801: A UE 1 (an example of a first terminal device) sends a message #1 (an example of a first message) to a relay UE (an example of a second terminal device).

The message #1 includes an L2 ID of a UE 3 (an example of a third terminal device) and QoS information, the QoS information includes a QFI (an example of first indication information) and a QoS parameter, the QFI identifies an identifier of a QoS flow (that is, an E2E QoS flow) between the UE 1 and the UE 3, and the QoS parameter is a parameter of the QoS flow between the UE 1 and the UE 3.

Based on the message #1, the relay UE may store a correspondence #1 between the L2 ID of the UE 3 and the QFI.

For details of S801, refer to S310.

S802: The relay UE sends a message #2 (an example of a second message) to the UE 1.

The relay UE may extract a PDB in the QoS parameter, to obtain the extracted PDB, and return the message #2 to the UE 1. The message #2 includes the QFI and the extracted PDB (an example of a first PDB).

For details of S802, refer to S320.

S803: The UE 1 determines an SLRB configuration.

After receiving the message #2, the UE 1 maps the extracted PDB to the E2E QoS flow based on the QFI.

Further, the UE 1 may determine, based on the correspondence between the extracted PDB and the E2E QoS flow, an SLRB configuration corresponding to an SLRB to which each E2E QoS flow is mapped. The SLRB configuration may include a PC5 configuration index.

For details of S803, refer to S350.

S804: The UE 1 sends a mapping list to the relay UE.

The mapping list includes a mapping relationship (an example of a first correspondence) between the QFI and the PC5 configuration index.

For details of S804, refer to S320.

S805: The relay UE determines a correspondence between the PC5 configuration index and the UE 3.

Based on the QFI, the correspondence #1, and the mapping list, the relay UE may associate the UE 3 and the PC5 configuration index, that is, determine a correspondence between the PC5 configuration index, the UE 1, and the UE 3, denoted as a correspondence #2.

For details of S805, refer to S330.

S806: The relay UE sends a message #4 (an example of a fourth message) to a gNB.

The relay UE maps the PC5 configuration index to an SLRB index (an example of third indication information) in a one-to-one manner, and stores a correspondence between the SLRB index, the PC5 configuration index, the UE 1, and the UE 3, denoted as a correspondence #3. The SLRB index uniquely identifies an E2E SLRB between the relay UE and the gNB.

When the relay UE is in a connected state, the relay UE sends the message #4 to the gNB. The message #4 includes the SLRB index, the L2 ID of the UE 3, and the QoS parameter.

For details of S806, refer to S510.

S807: The gNB sends a message #5 to the relay UE.

The gNB determines an SRAP configuration based on the QoS parameter, where the SRAP configuration includes a mapping relationship between the SLRB and an RLC channel ID. Further, the gNB sends the message #5 to the relay UE, where the message #5 includes a correspondence (an example of a third correspondence) between the SLRB index and the RLC channel ID.

For details of S807, refer to S520.

S808: The relay UE determines a correspondence between the RLC channel ID, the UE 1, and the UE 3.

Specifically, the relay UE may determine a correspondence between the PC5 configuration index, the RLC channel ID, the UE 1, and the UE 3 based on the SLRB index and the correspondence #3. Further, the relay UE may determine a correspondence between a bearer ID, the RLC channel ID, the UE 1, and the UE 3, denoted as a correspondence #4.

For details of S808, refer to S530.

S809: The relay UE sends a message #6 (an example of a sixth message) to the gNB.

The message #6 includes an RLC mode indication field, and indicates that an RLC mode of an RLC channel between the UE 1 and the relay UE is an AM mode. The message #6 does not include QoS flow information.

For details of S809, refer to S720.

S810: The gNB sends an RRC reconfiguration message (an example of a seventh message) to the relay UE, where the RRC reconfiguration message includes an RLC channel configuration.

For details of S810, refer to S730.

S811: The UE 1 sends a data packet #1 to the relay UE.

The data packet #1 carries an SRAP header, including local IDs of the UE 1 and the UE 3 and a bearer ID.

S812: The relay UE forwards the data packet #1 to the UE 3 (the example of the third terminal device).

Specifically, the relay UE may determine L2 IDs of the UE 1 and the UE 3 based on the local IDs, to determine, based on the correspondence #4, an RLC channel ID corresponding to the bearer ID in the data packet, and then forward the data packet through an RLC channel corresponding to the RLC channel ID.

S813: The relay UE feeds back an RLC status report to the UE 1.

Specifically, the relay UE may feed back the RLC status report to the UE 1 based on the RLC channel configuration obtained in S810. The status report may indicate whether the data packet #1 is successfully transmitted.

It should be understood that sequence numbers of the foregoing processes do not mean execution sequences. The execution sequences of the processes should be determined based on functions and internal logic of the processes, and should not be construed as any limitation on the implementation processes of embodiments of this application.

For example, in the method 800, S806 and S809 may be performed separately, or may be performed at the same time. In other words, the message #4 and the message #6 may be different messages, or may be a same message. Similarly, S807 and S810 may be performed separately, or may be performed at the same time. In other words, the message #5 and a message #7 may be different messages, or may be a same message.

It should be further understood that, in embodiments of this application, unless otherwise stated or there is a logic conflict, terms and/or descriptions in different embodiments are consistent and may be mutually referenced, and technical features in different embodiments may be combined to form a new embodiment based on an internal logical relationship thereof.

It should be further understood that in some of the foregoing embodiments, a device (for example, a network device or a terminal device) in a conventional network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by a device (for example, an access network device or a terminal device) may also be implemented by a component (for example, a chip or a circuit) of the device.

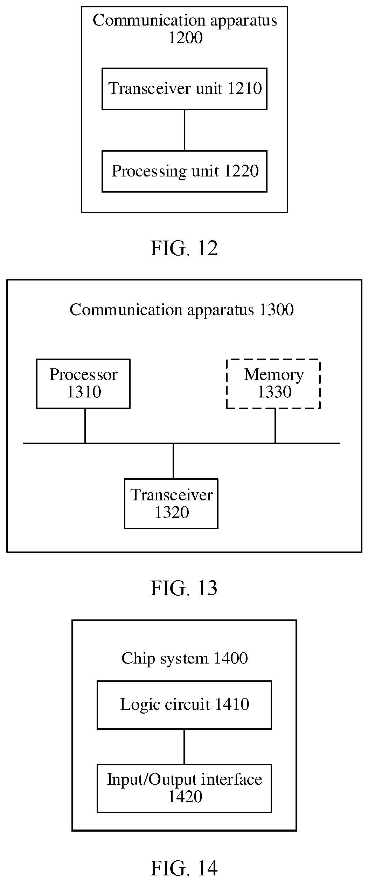

The foregoing describes in detail the sidelink communication method provided in embodiments of this application with reference to FIG. 3 to FIG. 11. The following describes in detail a communication apparatus provided in embodiments of this application with reference to FIG. 12 to FIG. 14.

FIG. 12 is a block diagram of an example of a communication apparatus according to an embodiment of this application. As shown in FIG. 12, the communication apparatus 1200 includes a transceiver unit 1210 and a processing unit 1220. The transceiver unit 1210 may implement a corresponding communication function, and the processing unit 1220 is configured to perform data processing, so that the communication apparatus implements the foregoing method embodiments. The transceiver unit 1210 may also be referred to as a communication interface or a communication unit.

Optionally, the communication apparatus 1200 may further include a storage unit. The storage unit may be configured to store instructions and/or data. The processing unit 1220 may read the instructions and/or the data in the storage unit, to cause the communication apparatus to implement the foregoing method embodiments.

The communication apparatus 1200 may be configured to perform an action performed by the first terminal device in the foregoing method embodiments. In this case, the communication apparatus 1200 may be the first terminal device or a component that may be configured in the first terminal device. The transceiver unit 1210 is configured to perform a receiving/sending-related operation on a first terminal device side in the foregoing method embodiments. The storage unit is configured to perform an operation related to data or instruction storage on the first terminal device side in the foregoing method embodiments. The processing unit 1220 is configured to perform a processing-related operation on the first terminal device side in the foregoing method embodiments.

Alternatively, the communication apparatus 1200 may be configured to perform an action performed by the second terminal device in the foregoing method embodiments. In this case, the communication apparatus 1200 may be the second terminal device or a component that may be configured in the second terminal device. The transceiver unit 1210 is configured to perform a receiving/sending-related operation on a second terminal device side in the foregoing method embodiments. The storage unit is configured to perform an operation related to data or instruction storage on the second terminal device side in the foregoing method embodiments. The processing unit 1220 is configured to perform a processing-related operation on the second terminal device side in the foregoing method embodiments.

Alternatively, the communication apparatus 1200 may be configured to perform an action performed by the access network device in the foregoing method embodiments. In this case, the communication apparatus 1200 may be the access network device or a component that may be configured in the access network device. The transceiver unit 1210 is configured to perform a receiving/sending-related operation on an access network device side in the foregoing method embodiments. The storage unit is configured to perform an operation related to data or instruction storage on the access network device side in the foregoing method embodiments. The processing unit 1220 is configured to perform a processing-related operation on the access network device side in the foregoing method embodiments.

It should be understood that, a specific process in which the units perform the foregoing corresponding steps is described in detail in the foregoing method embodiments. For brevity, details are not described herein again.

The processing unit 1220 in the foregoing embodiments may be implemented by at least one processor or a processor-related circuit. The transceiver unit 1210 may be implemented by a transceiver or a transceiver-related circuit. The transceiver unit 1210 may also be referred to as a communication unit or a communication interface. The storage unit may be implemented by at least one memory.

FIG. 13 is a block diagram of another example of a communication apparatus 1300 according to an embodiment of this application. As shown in the figure, the apparatus 1300 includes at least one processor 1310 and a transceiver 1320. The processor 1310 is coupled to a memory, and is configured to execute instructions stored in the memory, to send a signal and/or receive a signal. Optionally, the apparatus 1300 further includes the memory 1330, configured to store the instructions. Optionally, the apparatus 1300 further includes the transceiver 1320, and the processor 1310 controls the transceiver 1320 to send a signal and/or receive a signal.

It should be understood that the processor 1310 and the memory 1330 may be combined into one processing apparatus, and the processor 1310 is configured to execute program code stored in the memory 1330 to implement the foregoing functions. During specific implementation, the memory 1330 may alternatively be integrated into the processor 1310, or may be independent of the processor 1310.

It should be further understood that the transceiver 1320 may include a transceiver (or referred to as a receive machine) and a transmitter (or referred to as a transmit machine). The transceiver may further include an antenna, and there may be one or more antennas. The transceiver 1320 may alternatively be a communication interface or an interface circuit.

For example, the transceiver 1320 in the apparatus 1300 may correspond to the transceiver unit in the foregoing embodiment, and the processor 1310 in the apparatus 1300 may correspond to the processing unit in the foregoing embodiment.

In a solution, the apparatus 1300 is configured to implement operations performed by the first terminal device in the foregoing method embodiments.

For example, the processor 1310 is configured to execute a computer program or the instructions stored in the memory 1320, to implement related operations of the first terminal device in the foregoing method embodiments.

In another solution, the apparatus 1300 is configured to implement operations performed by the second terminal device in the foregoing method embodiments.

For example, the processor 1310 is configured to execute a computer program or the instructions stored in the memory 1320, to implement related operations of the second terminal device in the foregoing method embodiments.

In still another solution, the apparatus 1300 is configured to implement operations performed by the access network device in the foregoing method embodiments.

For example, the processor 1310 is configured to execute a computer program or the instructions stored in the memory 1320, to implement related operations of the access network device in the foregoing method embodiments.

It should be understood that a specific process in which the transceiver and the processor perform the foregoing corresponding steps is described in detail in the foregoing method embodiments. For brevity, details are not described herein again.

FIG. 14 is a block diagram of an example of a chip system 1400 according to an embodiment of this application. The chip system 1400 (or may be referred to as a processing system) includes a logic circuit 1410 and an input/output interface (input/output interface) 1420.

The logic circuit 1410 may be a processing circuit in the chip system 1400. The logic circuit 1410 may be coupled to and connected to a storage unit, and invoke instructions in the storage unit, so that the chip system 1400 can implement methods and functions in embodiments of this application. The input/output interface 1420 may be an input/output circuit in the chip system 1400, and outputs information processed by the chip system 1400, or inputs to-be-processed data or signaling information into the chip system 1400 for processing.

In a solution, the chip system 1400 is configured to implement operations performed by the first terminal device in the foregoing method embodiments.

For example, the logic circuit 1410 is configured to implement a processing-related operation performed by the terminal device in the foregoing method embodiments, and the input/output interface 1420 is configured to implement sending and/or receiving-related operations performed by the first terminal device in the foregoing method embodiments.

In another solution, the chip system 1400 is configured to implement operations performed by the second terminal device in the foregoing method embodiments.

For example, the logic circuit 1410 is configured to implement a processing-related operation performed by the second terminal device in the foregoing method embodiments, and the input/output interface 1420 is configured to implement sending and/or receiving-related operations performed by the second terminal device in the foregoing method embodiments.

In still another solution, the chip system 1400 is configured to implement operations performed by the access network device in the foregoing method embodiments.

For example, the logic circuit 1410 is configured to implement a processing-related operation performed by the access network device in the foregoing method embodiments, and the input/output interface 1420 is configured to implement sending and/or receiving-related operations performed by the access network device in the foregoing method embodiments.

An embodiment of this application further provides a computer-readable storage medium. The computer-readable storage medium stores computer instructions for implementing the method performed by the communication apparatus (for example, the first terminal device, the second terminal device, or the access network device) in the foregoing method embodiments.

An embodiment of this application further provides a computer program product, including instructions. When the instructions are executed by a computer, the method performed by the communication apparatus (for example, the first terminal device, the second terminal device, or the access network device) in the foregoing method embodiments is implemented.

An embodiment of this application further provides a communication system. The communication system includes one or more of the first terminal device, the second terminal device, and the access network device in the foregoing embodiments.

For explanations and beneficial effects of related content in any one of the apparatuses provided above, refer to the corresponding method embodiments provided above. Details are not described herein again.

In the foregoing embodiments, unless otherwise stated or there is a logic conflict, terms and/or descriptions in different embodiments are consistent and may be mutually referenced, and technical features in different embodiments may be combined to form a new embodiment based on an internal logical relationship thereof.

In the foregoing embodiments, "Optionally, the method further includes..." may be understood as that all these steps may be performed, or none of these steps may be performed, or only some of these steps may be performed. This is not limited in this application.

In embodiments of this application, terms such as "example" or "for example" represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any proper manner.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, both "when" and "if" mean that a network element performs corresponding processing in an objective situation, but do not constitute a limitation on time, do not require that the network element has a determining action during implementation, and do not mean another limitation either.

It should be noted that, in embodiments of this application, "preset", "preconfigure", or the like may be implemented by pre-storing, in a device (for example, a terminal device), corresponding code, a table, or another manner that can indicate related information. A specific implementation thereof is not limited in this application, for example, a preset rule or a preset constant in embodiments of this application.

In addition, the terms "system" and "network" may be used interchangeably in this specification.

The term "at least one of..." in this specification represents all or any combination of the listed items. For example, "at least one of A, B, and C" may represent the following six cases: Only A exists, only B exists, only C exists, both A and B exist, both B and C exist, and A, B, and C all exist. In this specification, "at least one" represents one or more, and "a plurality of" represents two or more.

It should be understood that in embodiments of this application, "B corresponding to A" represents that B is associated with A, and B may be determined based on A. However, it should be further understood that determining B based on A does not mean that B is determined based only on A. B may alternatively be determined based on A and/or other information.

In addition, "of (of)", "corresponding (corresponding, relevant)", "corresponding (corresponding)", and "associate (associate)" may be interchangeably used sometimes. It should be noted that meanings expressed by the terms are consistent when a difference between the terms is not emphasized. The terms "include", "have", and their variants all mean "include but are not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, to be specific, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes various media that can store program code, such as a USB flash drive, a removable hard disk drive, a read-only memory (read-only memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A sidelink communication method, wherein the method is performed by a first terminal device, and the method comprises:
sending a first message to a second terminal device, wherein the first message comprises first indication information and an identifier of a third terminal device, the first indication information indicates, between the first terminal device and the second terminal device, a first quality of service QoS flow, the first QoS flow is a QoS flow between the first terminal device and the third terminal device, the first terminal device communicates with the third terminal device via the second terminal device, and the first indication information comprises a QoS flow identifier QFI; and
sending a first correspondence to the second terminal device, wherein the first correspondence is a correspondence between the first indication information and a PC5 configuration index, and the PC5 configuration index identifies a sidelink radio bearer SLRB configuration between the first terminal device and the third terminal device.

2. The method according to claim 1, wherein the first message further comprises a QoS parameter corresponding to the first QoS flow, and the method further comprises:
receiving a second message from the second terminal device, wherein the second message comprises a first packet delay budget and the first indication information, the first packet delay budget is determined based on the QoS parameter, the first packet delay budget indicates a packet delay budget corresponding to the first QoS flow on a first link, and the first link is a link between the first terminal device and the second terminal device.

3. The method according to claim 2, wherein the method further comprises:
determining a correspondence between the first packet delay budget and the first QoS flow based on the first indication information.

4. The method according to any one of claims 1 to 3, wherein the identifier of the third terminal device is a layer-2 identifier.

5. A sidelink communication method, wherein the communication method is performed by a second terminal device, and the method comprises:
receiving a first message from a first terminal device, wherein the first message comprises first indication information and an identifier of a third terminal device, the first indication information indicates, between the first terminal device and the second terminal device, a first quality of service QoS flow, the first QoS flow is a QoS flow between the first terminal device and the third terminal device, the first terminal device communicates with the third terminal device via the second terminal device, and the first indication information comprises a QFI;
receiving a first correspondence from the first terminal device, wherein the first correspondence is a correspondence between the first indication information and a PC5 configuration index, and the PC5 configuration index identifies an SLRB configuration between the first terminal device and the third terminal device; and
determining a correspondence between the PC5 configuration index and the third terminal device based on the first message and the first correspondence.

6. The method according to claim 5, wherein the determining the correspondence between the PC5 configuration index and the third terminal device based on the first message and the first correspondence comprises:
associating the third terminal device with the PC5 configuration index in a one-to-one manner based on the first indication information.

7. The method according to claim 5 or 6, wherein the first message further comprises a QoS parameter corresponding to the first QoS flow, and the method further comprises:
determining a first packet delay budget based on the QoS parameter, wherein the first packet delay budget indicates a packet delay budget corresponding to the first QoS flow on a first link, and the first link is a link between the first terminal device and the second terminal device; and
sending a second message to the first terminal device, wherein the second message comprises the first packet delay budget and the first indication information.

8. A sidelink communication method, wherein the communication method is performed by a first terminal device, and the method comprises:
sending a first message to a second terminal device, wherein the first message comprises second indication information and an identifier of a third terminal device, the second indication information indicates, within a scope of the third terminal device, a first QoS flow, the first QoS flow is a QoS flow between the first terminal device and the third terminal device, the first terminal device communicates with the third terminal device via the second terminal device, and the second indication information comprises a PC5 QoS flow identifier PFI; and
sending a third message to the second terminal device, wherein the third message comprises the identifier of the third terminal device and a second correspondence, the second correspondence is a correspondence between the second indication information and a PC5 configuration index, and the PC5 configuration index identifies an SLRB configuration between the first terminal device and the third terminal device.

9. The method according to claim 8, wherein the first message further comprises a QoS parameter corresponding to the first QoS flow, and the method further comprises:
receiving a second message from the second terminal device, wherein the second message comprises a first packet delay budget, the identifier of the third terminal device, and the second indication information, the first packet delay budget is determined based on the QoS parameter, the first packet delay budget indicates a packet delay budget corresponding to the first QoS flow on a first link, and the first link is a link between the first terminal device and the second terminal device.

10. The method according to claim 9, wherein the method further comprises:
determining a relationship between the first packet delay budget and the first QoS flow based on the identifier of the third terminal device and the second indication information.

11. The method according to any one of claims 8 to 10, wherein the identifier of the third terminal device is a layer-2 identifier.

12. A sidelink communication method, wherein the communication method is performed by a second terminal device, and the method comprises:
receiving a first message from a first terminal device, wherein the first message comprises second indication information and an identifier of a third terminal device, the second indication information indicates, within a scope of the third terminal device, a first QoS flow, the first QoS flow is a QoS flow between the first terminal device and the third terminal device, the first terminal device communicates with the third terminal device via the second terminal device, and the second indication information comprises a PFI;
receiving a third message from the first terminal device, wherein the third message comprises the identifier of the third terminal device and a second correspondence, the second correspondence is a correspondence between the second indication information and a PC5 configuration index, and the PC5 configuration index identifies an SLRB configuration between the first terminal device and the third terminal device; and
determining a correspondence between the PC5 configuration index and the third terminal device based on the first message and the third message.

13. The method according to claim 12, wherein the determining the correspondence between the PC5 configuration index and the third terminal device based on the first message and the third message comprises:
associating the third terminal device with the PC5 configuration index in a one-to-one manner based on the identifier of the third terminal device and the second indication information.

14. The method according to claim 12 or 13, wherein the first message further comprises a QoS parameter corresponding to the QoS flow, and the method further comprises:
determining a first packet delay budget based on the QoS parameter, wherein the first packet delay budget indicates a packet delay budget corresponding to the first QoS flow on a first link, and the first link is a link between the first terminal device and the second terminal device; and
sending a second message to the first terminal device, wherein the second message comprises the identifier of the third terminal device, the second indication information, and the first packet delay budget.

15. A sidelink communication method, wherein the communication method is performed by a second terminal device, and the method comprises:
sending third indication information to an access network device, wherein the third indication information identifies, between the second terminal device and the access network device, a first SLRB, the first SLRB is an SLRB between a first terminal device and a third terminal device, and the first terminal device communicates with the third terminal device via the second terminal device;
receiving a third correspondence from the access network device, wherein the third correspondence is a correspondence between the third indication information and a radio link control RLC channel; and
determining a correspondence between the RLC channel and the third terminal device based on the third indication information and the third correspondence.

16. The method according to claim 15, wherein the determining the correspondence between the RLC channel and the third terminal device based on the third indication information and the third correspondence comprises:
associating the RLC channel with the third terminal device in a one-to-one manner based on the third indication information.

17. The method according to claim 15 or 16, wherein the method further comprises:
mapping a PC5 configuration index to the third indication information, wherein the PC5 configuration index identifies an SLRB configuration between the first terminal device and the third terminal device.

18. A sidelink communication method, wherein the communication method is performed by an access network device, and the method comprises:
receiving third indication information from a second terminal device, wherein the third indication information identifies, between the second terminal device and the access network device, a first SLRB, the first SLRB is an SLRB between a first terminal device and a third terminal device, and the first terminal device communicates with the third terminal device via the second terminal device; and
sending a third correspondence to the second terminal device, wherein the third correspondence is a correspondence between the third indication information and an RLC channel.

19. A sidelink communication method, wherein the communication method is performed by a second terminal device, and the method comprises:
sending a fourth message to an access network device, wherein the fourth message comprises fourth indication information and an identifier of a first terminal device, the fourth indication information identifies, on a first unicast connection, a first SLRB, the first unicast connection is a unicast connection between the first terminal device and a third terminal device, the first SLRB is an SLRB between the first terminal device and the third terminal device, and the first terminal device communicates with the third terminal device via the second terminal device;
receiving a fifth message from the access network device, wherein the fifth message comprises the identifier of the first terminal device and a fourth correspondence, and the fourth correspondence is a correspondence between the fourth indication information and an RLC channel; and
determining a correspondence between the first terminal device and the RLC channel based on the fourth message and the fifth message.

20. The method according to claim 19, wherein the determining the correspondence between the first terminal device and the RLC channel based on the fourth message and the fifth message comprises:
associating the first terminal device with the RLC channel in a one-to-one manner based on the fourth indication information and the identifier of the first terminal device.

21. A sidelink communication method, wherein the communication method is performed by an access network device, and the method comprises:
receiving a fourth message from a second terminal device, wherein the fourth message comprises fourth indication information and an identifier of a first terminal device, the fourth indication information identifies, on a first unicast connection, a first SLRB, the first unicast connection is a unicast connection between the first terminal device and a third terminal device, the first SLRB is an SLRB between the first terminal device and the third terminal device, and the first terminal device communicates with the third terminal device via the second terminal device; and
sending a fifth message to the second terminal device, wherein the fifth message comprises the identifier of the first terminal device and a fourth correspondence, and the fourth correspondence is a correspondence between the fourth indication information and an RLC channel.

22. The method according to claim 21, wherein the identifier of the first terminal device is a layer-2 identifier.

23. A sidelink communication method, wherein the communication method is performed by a second terminal device, and the method comprises:
determining a sixth message, wherein the sixth message comprises fifth indication information, the fifth indication information indicates an RLC mode of an RLC channel between a first terminal device and the second terminal device, the sixth message does not comprise information about a first QoS flow, the first QoS flow is a QoS flow between the first terminal device and the third terminal device, and the first terminal device communicates with the third terminal device via the second terminal device; and
sending the sixth message to an access network device.

24. A communication apparatus, wherein the apparatus comprises a unit configured to perform the method according to any one of claims 1 to 23.

25. A communication apparatus, comprising:
a processor, wherein the processor is coupled to a memory, the memory stores instructions, and when the instructions are executed by the processor, the apparatus is caused to perform the method according to any one of claims 1 to 23.

26. A computer-readable storage medium, wherein the computer-readable storage medium stores a computer program, and when the computer program is executed by a computer, the computer is caused to perform the method according to any one of claims 1 to 23.

27. A computer program product, wherein the computer program product comprises computer program code, and when the computer program code is executed by a communication apparatus, the method according to any one of claims 1 to 23 is implemented.

28. A chip, comprising at least one processor and a communication interface, wherein the communication interface is configured to: receive data and/or information, and transmit the received data and/or information to the processor, and the processor processes the data and/or the information, to perform the communication method according to any one of claims 1 to 23.

29. A communication system, wherein the communication system comprises one or more of a first terminal device, a second terminal device, and an access network device, wherein
the first terminal device is configured to perform the communication method according to any one of claims 1 to 4, or the first terminal device is configured to perform the communication method according to any one of claims 8 to 11;
the second terminal device is configured to perform the communication method according to any one of claims 5 to 7, the second terminal device is configured to perform the communication method according to any one of claims 12 to 17, the second terminal device is configured to perform the communication method according to claim 19 or 20, or the second terminal device is configured to perform the communication method according to claim 23; or
the access network device is configured to perform the communication method according to any one of claims 18, 21, and 22.
